# EUROPÄISCHE PATENTSCHRIFT

(11) **EP 3 958 426 B1**
(45) Veröffentlichungstag und Bekanntmachung des Hinweises auf die Patenterteilung: **11.10.2023**
(21) Anmeldenummer: 20192020.4
(22) Anmeldetag: 20.08.2020
(51) Int. Cl.: H02J 3/38, H02J 3/46

(54) **UMRICHTERBASIERTE ERZEUGER UND VERFAHREN ZUM EINSPEISEN ELEKTRISCHER LEISTUNG**
CONVERTER BASED GENERATORS AND METHOD FOR SUPPLYING ELECTRICAL POWER
GÉNÉRATEURS BASÉS SUR UN CONVERTISSEUR ET PROCÉDÉ D'ALIMENTATION EN PUISSANCE ÉLECTRIQUE

(43) Veröffentlichungstag der Anmeldung: 23.02.2022
(73) Patentinhaber: Wobben Properties GmbH, 26607 Aurich (DE)
(72) Erfinder: BROMBACH, Johannes, 13437 Berlin (DE)
(74) Vertreter: Eisenführ Speiser

(56) Entgegenhaltungen:
- DE-A1-102017 112 944
- DE-A1-102017 113 006

## Beschreibung

Die vorliegende Erfindung betrifft ein Verfahren zum Einspeisen elektrischer Leistung in ein elektrisches Versorgungsnetz mittels eines umrichterbasierten Erzeugers, insbesondere mittels eines Windenergiesystems. Die Erfindung betrifft auch ein Windenergiesystem zum Einspeisen elektrischer Leistung in ein elektrisches Versorgungsnetz.

Es ist bekannt, elektrische Leistung mittels umrichterbasierter Erzeuger, wie Windenergieanlagen oder Windparks, in ein elektrisches Versorgungsnetz einzuspeisen. Der Anteil solcher umrichterbasierter Erzeuger nimmt dabei in vielen elektrischen Versorgungsnetzen zu. Dadurch kommt umrichterbasierten Erzeugern eine zunehmende Bedeutung zur Stützung des elektrischen Versorgungsnetzes zu.

Dabei wurde erkannt, dass umrichterbasierte Erzeuger dabei zunehmend eine Netzstützungsaufgabe wahrnehmen müssen, die bisher durch Großkraftwerke wahrgenommen wurde, die mittels direkt gekoppelter Synchrongeneratoren in das elektrische Versorgungsnetz einspeisen. Nicht nur die Art der Stützung durch direkt gekoppelte Synchrongeneratoren einerseits um umrichterbasierte Erzeuger andererseits unterscheidet sich, sondern auch das Verhalten des elektrischen Versorgungsnetzes insgesamt ändert sich.

Um das zu berücksichtigen, schlägt beispielsweise die Patentanmeldung US 2020/0119560 A1 vor, einen Umrichteranteil eines Netzabschnitts des elektrischen Versorgungsnetzes zu schätzen, um das Einspeisen der elektrischen Leistung daran anzupassen. Abhängig von dem geschätzten Umrichteranteil kann eine Adaption des Reglers, der das Einspeisen steuert, vorgesehen werden. Besonders kann damit die Dynamik des Reglers auf diese Netzeigenschaft angepasst werden.

Es wurde nun aber weiter erkannt, dass der Anteil umrichterbasierter Einspeiser stark schwanken kann. Ein geschätzter Umrichteranteil kann sich somit ständig verändern. Das kann zudem Auswirkungen auf die Stabilität des elektrischen Versorgungsnetzes haben. Es kommt dann hinzu, dass die Stabilität des elektrischen Versorgungsnetzes auch je nach Umrichteranteil im elektrischen Versorgungsnetz durch unterschiedliche Stützmaßnahmen sichergestellt werden kann. Besonders kann problematisch sein, dass auf Anzeichen eines potentiell drohenden Stabilitätsverlustes situationsabhängig sehr unterschiedlich reagiert werden muss. Besonders kann hier dasselbe Anzeichen, wie beispielsweise eine fluktuierende Frequenz, gleichwohl unterschiedliche Stützmaßnahmen erforderlich machen. Wird die falsche Stützmaßnahme gewählt, besteht die Gefahr, dass dem potentiell drohenden Stabilitätsverlust nicht entgegengewirkt wird, sondern dass sich die Situation vielmehr noch verschlimmern kann.

Die deutsche Offenlegungsschrift DE 10 2017 113 006 A1 betrifft eine Regelung in Abhängigkeit von einem Umrichteranteil, also einer Umrichterpenetration, wobei der Fokus darin liegt, wie ein solcher Umrichteranteil geschätzt werden kann.

Die deutsche Offenlegungsschrift DE 10 2017 112 944 A1 betrifft die Idee, in Abhängigkeit von einem Umrichteranteil von dem klassischen stromprägenden Modus zum spannungsprägenden Modus überzugehen, wobei ein aktueller Betriebsmodus zwischen dem stromprägenden und dem spannungsprägenden Betriebsmodus in mehreren Schritten oder in einem fließenden Übergang geändert werden kann.

Der vorliegenden Erfindung liegt somit die Aufgabe zu Grunde, zumindest eines der oben genannten Probleme zu adressieren. Insbesondere soll eine Lösung vorgeschlagen werden, bei der durch umrichterbasierte Erzeuger, die synonym auch als umrichterbasierte Einspeiser bezeichnet werden können, eine Netzstabilisierung trotz variierender Netzeigenschaften erreicht wird. Zumindest soll zu bisher bekannten Lösungen eine alternative Lösung vorgeschlagen werden.

Erfindungsgemäß wird ein Verfahren nach Anspruch 1 vorgeschlagen. Dieses Verfahren betrifft somit ein Verfahren zum Einspeisen elektrischer Leistung in ein eine Netzspannung mit einer Netzfrequenz aufweisendes elektrisches Versorgungsnetz mittels eines umrichterbasierten Erzeugers. Der umrichterbasierte Erzeuger verwendet somit wenigstens einen Umrichter, also einen Frequenzumrichter oder einen Frequenzwechselrichter, der auch einfach als Umrichter oder Wechselrichter bezeichnet werden kann, um in das elektrische Versorgungsnetz einzuspeisen. Insbesondere wird durch diesen wenigstens einen Umrichter unmittelbar ein einzuspeisender Strom nach Amplitude, Frequenz und Phase zum Einspeisen in das elektrische Versorgungsnetz erzeugt bzw. vorbereitet. Der wenigstens eine Umrichter erzeugt also unmittelbar einen Einspeisestrom.

Der umrichterbasierte Erzeuger kann insbesondere ein Windenergiesystem sein. Ein Windenergiesystem ist dabei eine Sammelbezeichnung, die sowohl eine einzelne Windenergieanlage umfasst, die alleine in ein elektrisches Versorgungsnetz einspeist, als auch einen Windpark, der mehrere Windenergieanlagen aufweist, die gemeinsam über einen Netzanschlusspunkt in ein elektrisches Versorgungsnetz einspeisen. Es kann auch wenigstens ein elektrischer Speicher in dem umrichterbasierten Erzeuger vorgesehen sein, von dem aus elektrische Leistung in das elektrische Versorgungsnetz eingespeist wird.

Dazu wird vorgeschlagen, einen Umrichteranteil eines Netzabschnitts des elektrischen Versorgungsnetzes zu schätzen. Der Umrichteranteil ist dabei ein Verhältnis mittels Umrichter eingespeister Leistung zu insgesamt eingespeister Leistung. Weist der Netzabschnitt also, um ein einfaches anschauliches Beispiel zu nennen, als Erzeuger nur ein Kraftwerk mit direkt gekoppeltem Synchrongenerator und einen Windpark auf, wobei das Kraftwerk und der Windpark jeweils gleich viel Leistung in das elektrische Versorgungsnetz einspeisen, so hat in diesem Fall der Umrichteranteil den Wert 0,5 bzw. 50 %.

In dem bereits genannten Dokument US 2020/0119560 A1 sind Verfahren zum Schätzen eines Umrichteranteils beschrieben und diese Schätzverfahren können auch hier eingesetzt werden. Das Schätzen des Umrichteranteils eines Netzabschnitts erfolgt insbesondere so, dass die mittels Umrichter in diesen Netzabschnitt eingespeiste Leistung ins Verhältnis gesetzt wird zu insgesamt in diesen Netzabschnitt eingespeister Leistung.

Es wird dann vorgeschlagen, elektrische Leistung mittels des umrichterbasierten Erzeugers in das elektrische Versorgungsnetz in einem Normalmodus einzuspeisen. In diesem Normalmodus arbeitet der umrichterbasierte Erzeuger, nämlich besonders ein regenerativer Erzeuger, somit in üblicher Art und Weise. Vorzugsweise und soweit möglich speist er so viel Leistung in das elektrische Versorgungsnetz ein, wie er aus der betreffenden erneuerbaren Energiequelle, also besonders aus Wind oder Sonneneinstrahlung, erzeugen kann.

Weiterhin wird das Aktivieren wenigstens einer Stützregelung zum Stützen des elektrischen Versorgungsnetzes vorgeschlagen, wobei das Aktivieren in Abhängigkeit von dem Umrichteranteil erfolgt, wobei die wenigstens eine Stützregelung jeweils über einen Aktivierungsgrad einstellbar ist und der Aktivierungsgrad der wenigstens einen Stützregelung jeweils von dem geschätzten Umrichteranteil abhängt.

Die Stützregelung kann somit Regelungsfunktionen zum Stützen des elektrischen Versorgungsnetzes durchführen, wie z.B. eine spannungsabhängige Blindleistungseinspeisung, oder frequenzabhängige Wirkleistungseinspeisung.

Es wurde aber erkannt, dass in Abhängigkeit vom Umrichteranteil das elektrische Versorgungsnetz, das vereinfachend und synonym auch als Netz bezeichnet werden kann, unterschiedlich reagieren kann und das Auswirkung auf die Wirksamkeit der Regelungsfunktionen haben kann. Daher wird vorgeschlagen, dass die Stützregelung nicht nur bedarfsabhängig aktiviert oder deaktiviert wird, sondern dass sie jeweils unterschiedlich stark aktiviert wird. Dafür wird die Verwendung des Aktivierungsgrads vorgesehen. Dieser wird in Abhängigkeit vom geschätzten Umrichteranteil gewählt und kann unterschiedliche Werte annehmen.

Vorzugsweise wird vorgeschlagen, dass der Aktivierungsgrad einen vom Umrichteranteil abhängigen Werteverlauf aufweist, und der Aktivierungsgrad jeweils Werte in einem Wertebereich von 0 bis 100% kontinuierlich oder in mehr als zwei Stufen, insbesondere in mehr als 5 Stufen, annehmen kann. Dadurch kann sowohl eine sehr starke, einschließlich vollständige Aktivierung, erfolgen, als auch eine schwache Aktivierung, und auch Werte dazwischen. Durch eine kontinuierliche Auswahlmöglichkeit kann jeder Wert zwischen 0% und 100% gewählt werden.

Vorzugsweise entspricht ein Aktivierungsgrad von 0% einer Deaktivierung, und ein Aktivierungsgrad von 100% entspricht einer vollständigen Aktivierung.

Vorzugsweise ist die Stützregelung durch eine Übertragungsfunktion gekennzeichnet, die auch als Reglerübertragungsfunktion bezeichnet werden kann, und der Aktivierungsgrad wird als Faktor auf die Übertragungsfunktion angewendet. Die Übertragungsfunktion beschreibt mathematisch die Beziehung zwischen einem Ein- und Ausgangssignal der Stützregelung bzw. des in der Stützregelung verwendeten Reglers. Beispielsweise die Beziehung zwischen Frequenz und Wirkleistung, wenn die Stützregelung als frequenzabhängige Wirkleistungsregelung ausgebildet ist. Die Beziehung kann im einfachsten Fall statisch sein, z.B. als Verstärkungsfaktor ausgebildet sein. Sie kann aber auch eine dynamische Beziehung sein, wenn z.B. ein Integralanteil vorhanden ist. Es kommt auch in Betracht, dass die Übertragungsfunktion nichtlinear ist. Die Stützregelung kann auch synonym als Stützfunktion bezeichnet werden, die nämlich für die Funktion der Stützregelung steht.

Die unterschiedlich starke Aktivierung kann dann einfach durch Multiplikation der Übertragungsfunktion mit dem Aktivierungsgrad erreicht werden.

Alternativ wird vorgeschlagen, falls die Stützregelung durch mehrere Reglereinheiten umsetzbar ist, dass eine Anzahl der für die Stützregelung verwendeten Reglereinheiten von dem Aktivierungsgrad abhängt, sodass umso mehr Reglereinheiten verwendet werden, je größer der Aktivierungsgrad ist. Diese Alternative kann gewählt werden, wenn die jeweilige Reglereinheit vollständig, insbesondere strukturell geändert wird. Dann kann ein teilweises Aktivieren der Reglereinheit ggf. nicht in Betracht kommen. Dafür wird dann aber vorgeschlagen, je nach Aktivierungsgrad entsprechend viele Reglereinheiten zu aktivieren.

Vorzugsweise ist vorgesehen, dass ein potentieller Anteilsbereich fürden geschätzten Umrichteranteil in einem unteren, mittleren und oberen Anteilsbereich eingeteilt werden kann. Hier wurde besonders erkannt, dass es drei signifikante Bereiche für den Umrichteranteil geben kann, die hierdurch gut berücksichtigt werden können.

Dabei wird besonders vorgeschlagen, dass der untere Anteilsbereich unterhalb eines ersten Referenzwertes liegt, der mittlere Anteilsbereich beim ersten Referenzwert beginnt und bis zu einem zweiten Referenzwert liegt, der größer als der erste Referenzwert ist, und der obere Anteilsbereich oberhalb des zweiten Referenzwertes liegt. Der untere, mittlere und obere Anteilsbereich sind somit in aufsteigender Reihenfolge mit zunehmendem Umrichteranteil sortiert.

Es werden somit drei Bereiche vorgeschlagen, die hier als Anteilsbereiche bezeichnet werden. Der Einteilung in diese drei Bereiche liegt folgende Erkenntnis zu Grunde. Im unteren Anteilsbereich kann die Netzregelung (fast) vollständig von den konventionellen Kraftwerken übernommen werden, also von den Erzeugern, die mit direkt gekoppelten Umrichtern in das elektrische Versorgungsnetz einspeisen. Das Netz wird im Wesentlichen so betrieben wie eh und je. Wie sich die Erneuerbaren Einspeiser verhalten, also die, die mittels Umrichter ins Netz einspeisen, ist kaum relevant.

In dem mittleren Anteilsbereich haben die Erneuerbaren einen relevanten Anteil. Die Systemregelung muss aber noch die Belange der Konventionellen beachten. Stützmaßnahmen sollten die Stützwirkung konventioneller Kraftwerke mit einbeziehen, da diese einen ebenso relevanten Anteil haben. Hier ergänzen die Erneuerbaren die Eigenschaften der Konventionellen.

Im oberen Anteilsbereich sind die Erneuerbaren dominant. Die Systemstabilität ist nicht mehr von den verbleibenden konventionellen Kraftwerken abhängig. Stützmaßnahmen können in Extremsituationen sogar ohne die Konventionellen auskommen, diese sogar aus dem Netz verdrängen, so dass sie sich ggf. vom Netz trennen müssen. Hier können Netzzustände zugelassen werden, für die ein Großkraftwerk nicht ausgelegt ist und die es in einen Eigenschutz fallen lassen könnten. Ein solcher Netzzustand kann z.B. ein entsprechend hoher Frequenzgradient sein. Das kann aber in solchen Extremsituationen hingenommen werden.

Somit kann erreicht werden, dass Stützmaßnahmen für unterschiedliche Netzeigenschaften, nämlich besonders für unterschiedliche Umrichteranteile in dem Netzabschnitt, unterschiedlich vorgesehen sind, wobei sie bei Bedarf und in ihrer Höhe einstellbar aktivierbar sind. Die Stützregelungen sind also nicht fest installiert oder fest implementiert, sondern sie werden bei Bedarf aktiviert.

Der untere, mittlere und obere Anteilsbereich kann auch als normaler Stützbereich, hybrider Stützbereich bzw. umrichterdominierter Stützbereich bezeichnet werden, denn die Art der Netzstützung kann von dem jeweiligen Bereich abhängen.

Insbesondere wird vorgeschlagen, dass der erste Referenzwert im Bereich von 50 - 60 % liegt und der zweite Referenzwert im Bereich von 80- 95 %. Hier wurde besonders erkannt, dass noch bis zu einem Anteil von nur 50 % die Netzregelung (fast) vollständig von den konventionellen Kraftwerken übernommen werden kann, wenn also nur die Hälfte der Leistung oder weniger durch Umrichter eingespeist wird, diesernormale Betriebs angenommen werden kann. Dieser Anteil von 50 % kann je nach weiteren Bedingungen auch bis zu 60 % reichen.

Bei darüber liegendem Anteil wurde erkannt, dass das Einspeisen durch Umrichter dominant wird und durch das Annehmen des mittleren Anteilsbereichs adressiert werden kann. Hierbei wurde erkannt, dass zumindest bis 80 % Umrichteranteil der verbleibende Anteil durch direkt gekoppelte Synchrongeneratoren eingespeister Leistung immerhin noch eine Relevanz hat. Insoweit kann im mittleren Anteilsbereich bei der Aktivierung der Stützregelung berücksichtigt werden, dass die Umrichter zwar eine gewisse Dominanz erlangt haben, die direkt gekoppelten Synchrongeneratoren aber immer noch eine wichtige Rolle spielen, oder sich zumindest nicht vom Netz trennen dürfen.

Diese Rolle kann in dem mittleren Anteilsbereich mit berücksichtigt werden. Besonders kann hierdurch die direkt gekoppelten Synchrongeneratoren noch eine Frequenzvorgabe der Netzfrequenz erfolgen. Besonders kommt hier in Betracht, dass in dem mittleren Anteilsbereich eine Netzstützung zwar schon das dominante Verhalten der Umrichter berücksichtigt, eine Frequenzführung durch die direkt gekoppelten Synchrongeneratoren gleichwohl zugrunde gelegt werden kann. Hier wird besonders auch berücksichtigt, dass Änderungen der Leistungsbilanz noch in der Frequenz ablesbar sind, nämlich durch die unmittelbare Reaktion der direkt gekoppelten Synchrongeneratoren. Gleichwohl wird im mittleren Anteilsbereich berücksichtigt, dass trotz der Ablesbarkeit der Leistungsbilanz in der Frequenzänderung eine Leistungsstützung durch die direkt gekoppelten Synchrongeneratoren schwach ist.

Außerdem wurde erkannt, dass bei einem sehr hohen Anteil durch Umrichter eingespeister Leistung, der ab 80 % vorliegen kann, spätestens aber bei 95 % und darüber vorliegt, ein anderes Netzverhalten vorliegt. Besonders wurde erkannt, dass auch eine Frequenzführung durch die direkt gekoppelten Synchrongeneratoren, sofern sie überhaupt noch vorhanden sind, nicht mehr stark ist. Im Grunde kann der obere Anteilsbereich berücksichtigen, dass bei einem so hohen Umrichteranteil von über 80 % oder sogar über 95 % das elektrische Versorgungsnetz sich nach Regeln verhält, die erheblich von den Regeln abweichen, die bei dominanten oder zumindest relevanten direkt gekoppelten Synchrongeneratoren vorliegen. Mit anderen Worten liegt bei einem so hohen Umrichteranteil ein Netz vor, das sich anders verhält oder verhalten kann, als das bei früheren Netzen der Fall war.

Vorzugsweise wird vorgeschlagen, dass der erste Referenzwert und/oder der zweite Referenzwert in Abhängigkeit von einer weiteren Netzeigenschaft des elektrischen Versorgungsnetzes gewählt werden. Der geschätzte Umrichteranteil ist somit eine Eigenschaft des elektrischen Versorgungsnetzes und dazu wird eine weitere Netzeigenschaft des elektrischen Versorgungsnetzes betrachtet. Hier wurde besonders erkannt, dass die erläuterten Charakteristika des elektrischen Versorgungsnetzes bzw. des Netzabschnitts nicht ausschließlich von dem geschätzten Umrichteranteil abhängen. Das Berücksichtigen der unterschiedlichen Anteilsbereiche vorzunehmen ist dennoch sinnvoll und eine weitere Abhängigkeit kann dadurch berücksichtigt werden, dass der erste und/oder der zweite Referenzwert entsprechend gewählt werden.

Vorzugsweise wird in Abhängigkeit von dieser weiteren Netzeigenschaft der erste bzw. zweite Referenzwert jeweils aus einem vorgegebenen Bereich in Abhängigkeit von dieser weiteren Netzeigenschaft ausgewählt. Insbesondere kann hierfür der Bereich von 50 - 60 % für den ersten Referenzwert und der Bereich von 80 - 95 % für den zweiten Referenzwert verwendet werden. Vorzugsweise werden sowohl der erste Referenzwert als auch der zweite Referenzwert in Abhängigkeit von der weiteren Netzeigenschaft ausgewählt. Es kommt aber auch in Betracht, dass nur einer der beiden Referenzwerte in Abhängigkeit von der weiteren Netzeigenschaft ausgewählt wird. Insbesondere kann diese Netzeigenschaft ein Lastflussmaß sein. Der erste und/oder zweite Referenzwert werden demnach in Abhängigkeit von einem Lastflussmaß ausgewählt. Das Lastflussmaß ist dadurch definiert, dass es einen maximalen Leistungsfluss zwischen dem Netzabschnitt und dem verbleibenden Teil des elektrischen Versorgungsnetzes kennzeichnet. Der verbleibende Teil des elektrischen Versorgungsnetzes ist somit das elektrische Versorgungsnetz insgesamt, aber ohne den betrachteten Netzabschnitt.

Im Betrieb des elektrischen Versorgungsnetzes kann ein Leistungsausgleich vom oder zum Netzabschnitt vorkommen. Es fließt dann Leistung aus dem Netzabschnitt oder in den Netzabschnitt, was hier als Leistungsfluss bezeichnet wird. Dieser Leistungsfluss kann schwanken und er kann auch den Wert null erreichen, wenn nämlich in dem Moment kein Leistungsausgleich zwischen dem Netzabschnitt und dem verbleibenden Teil des elektrischen Versorgungsnetzes erfolgt.

Es wurde hier erkannt, dass der maximale Leistungsfluss, also der maximale Leistungsausgleich, eine Netzeigenschaft bildet und zudem das Verhalten, die Charakteristik und auch die Stabilität besonders des Netzabschnitts beeinflussen bzw. kennzeichnen kann. Ein positiver Leistungsfluss ist dann die Abgabe von Leistung, nämlich Wirkleistung, von dem Netzabschnitt in den verbleibenden Teil des elektrischen Versorgungsnetzes. Hier wurde besonders erkannt, dass bei Netzabschnitten mit einem relevanten Umrichteranteil häufig ein Netzabschnitt mit verteilten, regenerativen Erzeugern und wenig Verbrauchern vorliegt. Ein solcher Netzabschnitt exportiert daher häufig Leistung. Genau diese Eigenschaft kennzeichnet diesen Netzabschnitt auch.

Es kommt aber auch vor, dass Leistung importiert wird, also von dem verbleibenden elektrischen Versorgungsnetz in den Netzabschnitt eingespeist wird. Besonders dann, aber auch generell, kommt in Betracht, als maximalen Leistungsfluss einen Betrag anzusetzen, also das Vorzeichen außer Betracht zu lassen.

Besonders bei der Betrachtung des Betrags der Leistung kommt auch in Betracht, als maximalen Leistungsfluss denjenigen anzusetzen, der durch einen oder mehrere Übergabepunkte zwischen dem Netzabschnitt und dem verbleibenden Teil des elektrischen Versorgungsnetzes vorgegeben ist. Es kommt zwar in Betracht, dass die so vorgegebene maximal übertragbare Leistung nicht ausgenutzt wird, gleichwohl kann dies kennzeichnend für das elektrische Versorgungsnetz bzw. den Netzabschnitt sein. Vorzugsweise wird als maximaler Leistungsfluss ein normierter Wert verwendet, nämlich die maximal von dem Netzabschnitt exportierte oder importierte Leistung im Verhältnis zu insgesamt in den Netzabschnitt einspeisbarer Leistung.

Es kommt auch vor, dass der Netzabschnitt das gesamte elektrische Versorgungsnetz bildet, nämlich besonders dann, wenn das elektrische Versorgungsnetz und damit der Netzabschnitt ein Inselnetz bildet. Ein solches abgeschlossenes Netz kann besonders dann als Inselnetz bezeichnet werden, wenn die insgesamt in den Netzabschnitt und damit in das elektrische Versorgungsnetz einspeisbare Leistung 10 GW nicht überschreitet.

Im Falle eines Inselnetzes ist der maximale Leistungsfluss zwischen dem Netzabschnitt und einem verbleibenden Teil des elektrischen Versorgungsnetzes somit null, weil es keinen verbleibenden Teil des elektrischen Versorgungsnetzes gibt.

Es wurde besonders erkannt, dass somit über die Betrachtung des maximalen Leistungsflusses auch das Vorliegen eines Inselnetzes mit berücksichtigt werden kann.

Es wurde auch erkannt, dass ein hoher Leistungsfluss, wenn also viel Ausgleichsleistung bzw. Ausgleichsenergie zum oder vom Netzabschnitt fließt, auf einen Lastausgleich durch große Schwungmassen hindeutet, nämlich durch Schwungmassen direkt gekoppelter Synchrongeneratoren, die in dem verbleibenden Teil des elektrischen Versorgungsnetzes angeordnet sind. Zumindest ist die in solchen schnelldrehenden Synchrongeneratoren gespeicherte kinetische Energie groß und kann entsprechend Stützleistung bereitstellen, nämlich von außerhalb des Netzabschnitts über die Ausgleichsleistung. Das kann bei der Auswahl des ersten und/oder zweiten Referenzwertes in Abhängigkeit von dem Lastflussmaß, also in Abhängigkeit von dem maximalen Leistungsfluss, berücksichtigt werden. Besonders wird vorgeschlagen, den ersten Referenzwert und/oder den zweiten Referenzwert umso kleiner zu wählen, je größer der maximale Leistungsfluss ist bzw. je größer das Lastflussmaß ist.

Gemäß einer Ausführungsform wird vorgeschlagen, dass mit einem maximalen Aktivierungsgrad im mittleren Anteilsbereich, insbesondere als eine Stützregelung, eine Emulationsfunktion aktiviert wird, die auf eine Frequenzänderung der Netzfrequenz mit einer Leistungsänderung eingespeister Leistung reagiert, wobei die Leistungsänderung als Reaktion auf die Frequenzänderung einem Verhalten einer direkt mit dem elektrischen Versorgungsnetz gekoppelten Synchronmaschine nachgebildet wird. Vorzugsweise wird eine virtuelle Schwungmasse mit einstellbarem Massenträgheitsmoment verwendet. Besonders arbeitet diese Emulationsfunktion so, dass die virtuelle Schwungmasse der aktuellen Frequenz entsprechend rotiert bzw. die Emulationsfunktion von einer entsprechenden Drehzahl der virtuellen Schwungmasse ausgeht. Einer Netzfrequenz von 50 Hz kann eine Drehzahl von 50 U/s, also 3000 U/min zugeordnet sein. Diese so rotierende virtuelle Schwungmasse weist auch einen Phasenwinkel auf, der zusammen mit einem Phasenwinkel der Netzspannung umläuft. Im stationären Zustand ergibt sich somit zwischen diesen beiden Phasenwinkeln kein Differenzwinkel bzw. dieser hat den Wert null.

Ändert sich nun die Frequenz, indem sie sich beispielsweise erhöht, so wird der Phasenwinkel der Netzspannung relativ zu dem Phasenwinkel der umlaufenden virtuellen Schwungmasse allmählich erhöht. Es ergibt sich ein Differenzwinkel und abhängig von diesem Differenzwinkel wird die Leistungseinspeisung in einem Fall verringert und die weniger eingespeiste Leistung wird in der Emulationsfunktion dazu verwendet, die virtuelle Schwungmasse zu beschleunigen. Entsprechend der hierzu verwendeten Leistung erhöht sich die kinetische Energie der virtuellen Schwungmasse. Sie beschleunigt entsprechend, nämlich entsprechend dieser zur Beschleunigung verwendeten Leistung und dem virtuellen, gegebenenfalls einstellbaren Massenträgheitsmoment. Sie beschleunigt sich also aufgrund bekannter physikalischer Zusammenhänge. Dadurch kann der Phasenwinkel der virtuellen Schwungmasse dem Phasenwinkel der Netzspannung dann wieder entsprechend nachgeführt werden. Durch die Auswahl oder gegebenenfalls Einstellung des Massenträgheitsmoments wird die Dynamik dieses Nachführens beeinflusst.

Bei umgekehrtem Vorzeichen des Differenzwinkels erhöht sich die eingespeiste Leistung und die Drehzahl der virtuellen Schwungmasse verringert sich. Der Vorschlag bedeutet somit, dass eine virtuelle Maschine hier mitläuft, insbesondere antriebsfrei als (feste) Schwungmasse mitläuft. Dadurch kann eine Stabilisierung der Frequenz erreicht werden. Im stationären Zustand ist der Differenzwinkel null.

Insbesondere wird vorgeschlagen, dass der Aktivierungsgrad zum Einstellen der Emulationsfunktion im unteren Anteilsbereich von einem kleinen Wert von maximal 10%, insbesondere 0%, mit zunehmendem Umrichteranteil ansteigt, im mittleren Anteilsbereich einen maximalen Wert, insbesondere 100%, erreicht, und mit weiter zunehmendem Umrichteranteil wieder abfällt und im oberen Anteilsbereich einen kleinen Wert von maximal 10%, insbesondere 0% erreicht. Insbesondere wird zum Einstellen der Emulationsfunktion die Emulationsfunktion mit dem Aktivierungsgrad multipliziert. Dadurch wird somit die Emulationsfunktion aktiviert, nämlich mit unterschiedlichen Aktivierungsgraden.

Hier wurde erkannt, dass die Emulationsfunktion besonders im mittleren Anteilsbereich wichtig ist, weil hier der Einfluss der direkt gekoppelten Synchrongeneratoren schwächer ist und durch die Emulationsfunktion dies durch ein emuliertes Verhalten ausgleicht. Beim oberen Anteilsbereich ist die Emulationsfunktion aber nicht mehr so sinnvoll, weil sich das Netz nach anderen Regel verhält.

Vorzugsweise wird der maximale Wert, insbesondere 100%, oder zumindest ein großer Wert von wenigstens 80% für den gesamten mittleren Anteilsbereich, oder zumindest 50% davon, verwendet. Der kleine Wert beträgt besonders 0%, denn dadurch ist diese Emulationsfunktion in den Bereichen, in denen sie nicht benötigt wird, deaktiviert. Ein ähnlicher Effekt kann durch einen sehr geringen Wert erreicht werden. Als kleiner Wert wird hier und für jegliche andere Ausführungsformen vorzugsweise ein Wert bis 10% bezeichnet.

Außerdem oder alternativ wird vorgeschlagen, dass im mittleren Anteilsbereich eine Leistungsänderung eingespeister Leistung als Reaktion auf eine Frequenzänderung eine wenigstens doppelt so hohe Amplitude aufweist wie bei einer parallel arbeitenden frequenzabhängigen Leistungsregelung ohne Emulation einer Synchronmaschine bei gleicher Frequenzänderung. Hier wurde besonders erkannt, dass auch mit einem anderen Regler, der keine Emulation verwendet, vorgesehen sein kann, dass sich die eingespeiste Leistung in Abhängigkeit von einer Frequenzänderung verändert. Im Vergleich dazu wird hier vorgeschlagen, dass eine stärkere Verstärkung vorgesehen ist, nämlich eine wenigstens doppelt so starke Steigung der Leistungsänderung in Abhängigkeit von einer Frequenzänderung.

Außerdem oder alternativ wird vorgeschlagen, dass im mittleren Anteilsbereich für eine Leistungsänderung eingespeister Leistung als Reaktion auf eine Frequenzänderung keine Mindestfrequenzabweichung der Netzfrequenz von einer Referenzfrequenz vorgegeben wird, oder dass eine vorbestimmte Mindestfrequenzabweichung zumindest geringer ist als bei einer parallel arbeitenden frequenzabhängigen Leistungsregelung ohne Emulation einer Synchronmaschine. Hier wurde besonders erkannt, dass mit einem anderen Regler, der keine Emulation verwendet, ein übliches Totband für die Frequenz angesetzt werden kann. Solange sich die Regelung nur im Normalmodus befindet, solange also der Umrichteranteil entsprechend gering ist, kann von einer vergleichsweise hohen Toleranz des elektrischen Versorgungsnetzes auf eine Netzfrequenzschwankung ausgegangen werden. Es braucht dann nicht nachgeregelt zu werden. Erst wenn dieses Totband verlassen wird, wenn also eine vergleichsweise große Frequenzänderung vorliegt, würde dann reagiert werden.

Für den mittleren Anteilsbereich wurde erkannt, dass auf eine Frequenzänderung sofort reagiert werden sollte, um damit der Charakteristik des elektrischen Versorgungsnetzes gerecht zu werden. Es kommt auch in Betracht, dass der Totbandbereich zumindest geringer ist. Insbesondere wird hier vorgeschlagen, dass der Totbandbereich der Frequenz maximal halb so groß ist wie der Totbandbereich, der ansonsten zugrunde liegt.

Hier wurde besonders erkannt, dass ein direkt gekoppelter Synchrongenerator auf eine Frequenzänderung reagiert und dabei regelmäßig kein Totband kennt, denn die Reaktion ist physikalisch bedingt. Durch zunehmenden Umrichteranteil im Netz und damit entsprechend geringem Anteil direkt gekoppelter Synchrongeneratoren im Netz nimmt diese frequenzabhängige Reaktion der direkt gekoppelten Synchrongeneratoren ab. Entsprechend wird für den mittleren Anteilsbereich vorgeschlagen, durch die Umrichter bereits auf besonders kleine Frequenzänderungen zu reagieren, um eine entsprechende schwächere Reaktion direkt gekoppelter Synchrongeneratoren auszugleichen.

Gemäß einer Ausführungsform wird vorgeschlagen, dass mit einem maximalen Aktivierungsgrad im mittleren Anteilsbereich, insbesondere als eine Stützregelung, eine Leistungsabregelungsfunktion zur schnellen Leistungsabregelung implementiert ist, wobei die Leistungsabregelungsfunktion auf ein Anforderungssignal oder Anforderungskriterium das Einspeisen elektrischer Leistung reduziert. Hier wurde besonders erkannt, dass in manchen Fällen eine schnelle Leistungsabregelung das Netz stabilisieren kann. Eine solche schnelle Leistungsabregelung kann besonders dann relevant sein, wenn sich ein großer Verbraucher plötzlich vom Netz trennt. Eine solche Netzabtrennung kann beispielsweise bei diesem Verbraucher durch einen Schutzschalter ausgelöst sein oder aber auch, wenn sich ein Netzabschnitt mit vielen Verbrauchern vom Netz trennt. In dem Moment ist dann die Leistungsbilanz schlagartig nicht mehr ausbalanciert, und um das zu adressieren, wird diese schnelle Leistungsabregelung vorgeschlagen. Besonders wurde erkannt, dass bei einem entsprechenden Umrichteranteil, der im mittleren Anteilsbereich vorliegt, diese umrichterbasierten Erzeuger einen entsprechenden Beitrag leisten können.

Für diese Abregelung kann ein Anforderungssignal vorgesehen sein, das beispielsweise ein Netzbetreiber überträgt, es kann aber auch die Reaktion auf einen Netzzustand sein, besonders auf eine Änderung der Netzfrequenz. Die schnelle Leistungsreduktion kann auch in Abhängigkeit von einer absoluten Frequenz erfolgen, besonders wenn die Netzfrequenz einen vorgegebenen oberen Frequenzwert überschreitet oder einen vorgegebenen unteren Frequenzwert unterschreitet.

Vorzugsweise wird vorgeschlagen, dass eine Winkelbeschleunigung erfasst wird. Die Netzspannung weist einen mit der Netzfrequenz umlaufenden Phasenwinkel auf. Für diesen Phasenwinkel kann eine Beschleunigung erfasst werden, die auch negativ sein kann. Aus dieser Beschleunigung, die somit eine Winkelbeschleunigung ist, lässt sich eine Frequenzänderung ableiten. Daher wird vorgeschlagen, die Leistungsabregelungsfunktion in Abhängigkeit von einer solchen Winkelbeschleunigung durchzuführen, nämlich in Abhängigkeit von einer positiven Winkelbeschleunigung. Dazu kann ein Beschleunigungsgrenzwert festgelegt werden, sodass die Leistungsabregelungsfunktion gestartet wird, sobald dieser Beschleunigungsgrenzwert überschritten wird. Die Leistungsabregelungsfunktion kann auch als Emulationsfunktion implementiert sein. Die vorstehend beschriebene Emulationsfunktion kann als eine solche Leistungsabregelungsfunktion ausgebildet sein.

Weiter wird vorgeschlagen, dass die Reduzierung der Leistung durch eine Reduzierungszeitkonstante gekennzeichnet ist, wobei die Reduzierungszeitkonstante eine Zeit bezeichnet, in der die Leistung um einen Nennleistungswert reduziert wird, wobei die Reduzierungszeitkonstante kleiner als 2 s ist, insbesondere kleiner als 1 s ist und weiter bevorzugt kleiner als 0,5 s ist. Weist der umrichterbasierte Erzeuger beispielsweise eine Nennleistung von 4 MW auf und ist die Reduzierungszeitkonstante beispielsweise kleiner als 1 s, so kann die Leistung von dem Nennleistungswert von 4 MW auf null in weniger als 1 s reduziert werden. Insoweit gibt die Reduzierungszeitkonstante eine Dynamik der Reduzierung an. Anschaulich gesprochen gibt sie eine Flankensteilheit für die Reduzierung der Leistung an. Diese Flankensteilheit hängt dabei nicht von der Amplitude der absoluten Reduzierung ab.

Ist also die Reduzierungszeitkonstante, um bei obigem Beispiel zu bleiben, kleiner als 1 s, und wird die Leistung in dem genannten Beispiel nur um 2 MW reduziert, so erfolgt dies in einer Zeit von weniger als 0,5 s.

Hier wurde besonders auch erkannt, dass eine solch schnelle Reduzierung mit einem umrichterbasierten Erzeuger möglich ist.

Insbesondere wird vorgeschlagen, dass der Aktivierungsgrad zum Einstellen der Leistungsabregelungsfunktion im unteren Anteilsbereich von einem kleinen Wert von maximal 10%, insbesondere 0%, mit zunehmendem Umrichteranteil ansteigt, im mittleren Anteilsbereich einen maximalen Wert, insbesondere 100%, erreicht, und mit weiter zunehmendem Umrichteranteil wieder abfällt und im oberen Anteilsbereich einen kleinen Wert von maximal 10%, insbesondere 0% erreicht. Vorzugsweise wird zum Einstellen der Leistungsabregelungsfunktion die Leistungsabregelungsfunktion mit dem Aktivierungsgrad multipliziert. Auch hier wurde, wie oben erläutert, erkannt, dass die Leistungsabregelungsfunktion für den mittleren Anteilsbereich sinnvoll ist.

Die Multiplikation mit der Leistungsabregelungsfunktion kann besonders dazu führen, dass die Leistung bei Aktivierungsgraden unter 100% entsprechend weniger reduziert wird. Damit wird die Flanke flacher und die Abregelung langsamer. Dasselbe Ergebnis kann auch dadurch erreicht werden, dass die gewählten Zeitkonstanten durch den Aktivierungsgrad geteilt werden. Ist der Aktivierungsgrad 0%, ergibt sich (mathematisch) der Wert unendlich für die betreffende Zeitkonstante, und das entspricht dann einer Deaktivierung der schnellen Leistungsabregelung. Durch eine teilweise Aktivierung, also eine Aktivierung mit einem Wert unter 100%, kann das Ergebnis sein, dass eine unten noch beschriebene Abregelung, die einen negativen Wert erreicht, dann ggf. doch nicht diesen negativen Wert erreicht. Es liegt dann aber trotzdem noch die entsprechende Abregelung vor, die aber durch den Aktivierungsgrad in ihrer Funktion reduziert ist. Gleiches gilt für den Fall, wenn die Reduzierung der eingespeisten Leistung schneller ist als das Reduzieren der Leistungserzeugung. Auch dies gilt für den Fall einer 100% Aktivierung, wenn der Aktivierungsgrad also 100% beträgt.

Wird als umrichterbasierter Erzeuger ein Windenergiesystem verwendet, also eine Windenergieanlage oder ein Windpark, so wird gemäß einer Variante vorgeschlagen, dass die Reduzierung der eingespeisten Leistung schneller ist als eine Reduzierung mittels des Windenergiesystems aus winderzeugter Leistung. Bei einem Abregelvorgang einer Windenergieanlage kann die Leistungsreduzierung so erfolgen, dass die Rotorblätter aus dem Wind in Richtung Fahnenstellung gedreht werden. Dadurch wird die aus dem Wind entnommene Leistung reduziert und entsprechend kann auch die in das elektrische Versorgungsnetz eingespeiste Leistung reduziert werden.

Dieser Vorgang ist zwar im Vergleich zu der Reduzierung von Großkraftwerken immer noch sehr schnell, benötigt dennoch eine gewisse Zeit. Es wird vorgeschlagen, dass die Leistungsabregelungsfunktion im mittleren Anteilsbereich so ausgestaltet ist, dass die Leistung aber noch schneller reduziert wird. Das kann besonders dadurch erfolgen, dass dabei aus Wind zu viel erzeugte Leistung innerhalb der Windenergieanlage verbraucht wird. Gleiches gilt für einen Windpark, in dem mehrere Windenergieanlagen zugleich ihre Leistung reduzieren. Die Leistung wird also durch Verstellen der Rotorblätter reduziert und außerdem durch Verbrauch von Leistung.

Außerdem oder alternativ wird somit vorgeschlagen, dass zum Reduzieren der eingespeisten Leistung bei dieser Leistungsabregelungsfunktion mit einem maximalen Aktivierungsgrad im mittleren Anteilsbereich Leistung im Windenergiesystem zusätzlich verbraucht wird, insbesondere mittels einer Chopperschaltung. Eine Chopperschaltung ist grundsätzlich bekannt, sie kann elektrische Leistung aus einem Gleichspannungszwischenkreis dadurch abführen, dass durch eine gepulste Ansteuerung Strom aus diesem Gleichspannungszwischenkreis durch einen Widerstand fließt und dort in Wärme umgewandelt wird. Hier wird vorgeschlagen, diesen Leistungsverbrauch bei der Ausgestaltung der Leistungsabregelungsfunktion mit einzubeziehen. Besonders kann die Leistungsabregelungsfunktion, die hier für den mittleren Anteilsbereich vorgeschlagen wird, über eine Leistungsvorgabe die Leistung, also die in das elektrische Versorgungsnetz eingespeiste Leistung, vorgeben und damit auch ihre Reduzierung vorgeben. Die Reduzierung wird also so vorgegeben, dass sie nur realisiert werden kann, wenn zusätzlich Leistung im Windenergiesystem verbraucht wird.

Außerdem oder alternativ wird für diese Leistungsabregelungsfunktion mit einem maximalen Aktivierungsgrad im mittleren Anteilsbereich vorgeschlagen, dass die eingespeiste Leistung auf einen Wert unter null reduziert wird, sodass das Windenergiesystem Leistung aus dem elektrischen Versorgungsnetz entnimmt und insbesondere, zumindest teilweise, mittels einer Chopperschaltung verbraucht. Es können aber auch andere Verbraucher in der Windenergieanlage oder dem Windpark zum Verbrauchen elektrischer Leistung eingesetzt werden. Beispielsweise können die Rotorblätter der Windenergieanlagen beheizt werden, obwohl es aufgrund der Außentemperatur keinen Anlass dafür gibt, um ein Beispiel zu nennen. Auch hier wird somit die Leistungsabregelungsfunktion des mittleren Anteilsbereichs entsprechend ausgebildet, nämlich so, dass sie auch zum Einspeisen negative Werte vorgeben kann. Insbesondere kann sie eine Leistungsreduzierung vorgeben, die von einem positiven eingespeisten Leistungswert eine Reduzierung bis zu negativen Werten der eingespeisten Leistung steuert.

Gemäß einer Ausgestaltung wird vorgeschlagen, dass mit einem maximalen Aktivierungsgrad im mittleren Anteilsbereich, insbesondere als eine Stützregelung, eine Frequenzgradientenregelung aktiviert wird, wobei die Frequenzgradientenregelung die Leistungseinspeisung in Abhängigkeit von einer Frequenzänderung verändert, insbesondere einen Teil der eingespeisten Leistung proportional zur Frequenzänderung vorgibt. Hier wurde besonders erkannt, dass eine solche Regelung der eingespeisten Leistung in Abhängigkeit von der Frequenzänderung besonders im mittleren Anteilsbereich vorteilhaft ist. Im mittleren Anteilsbereich sind noch so viele direkt gekoppelte Synchrongeneratoren an den Netzabschnitt angeschlossen, dass die Frequenz und eine Frequenzänderung eine gute Aussagekraft zu einer Leistungsänderung hat.

Gleichzeitig ist aber der Umrichteranteil bereits so hoch, dass den umrichterbasierten Erzeugern eine große Bedeutung für die Leistungsregelung zukommt. Dabei wurde erkannt, dass hierfür eine besonders schnelle frequenzabhängige Leistungsregelung sinnvoll ist und dadurch erreicht werden kann, dass die Leistungseinspeisung in Abhängigkeit von der Frequenzänderung verändert wird. Durch die Erfassung der Frequenzänderung, besonders die Erfassung eines Frequenzgradienten, kann somit nicht nur eine absolute Frequenzabweichung, also die Abweichung der Netzfrequenz von einer Netznennfrequenz, oder anderen Referenzfrequenz, erfasst werden, sondern auch eine Änderung und damit auch die Schnelligkeit der Veränderung erfasst werden.

Vorzugsweise liegt einer solchen Erfassung einer Frequenzänderung kein Totband der absoluten Frequenzabweichung zugrunde. Wenn sich also die Frequenz selbst im Nennpunkt bzw. ausgehend vom Nennpunkt, also bei Nennfrequenz oder in unmittelbarer Nähe der Nennfrequenz schnell ändert, kann dies von dieser Frequenzgradientenregelung berücksichtigt werden. Es kann dann eine Leistungsanpassung umgesetzt werden, noch bevor die Frequenz einen Totbandbereich verlässt. Diese Regelung kann also bereits ansprechen, bevor eine Regelung, die eine absolute Abweichung der Frequenz betrachtet, aktiv wird, wenn ein Totband vorliegt.

Eine frequenzabhängige Leistungsregelung und eine Frequenzgradientenregelung können gleichzeitig wirken, wenn beispielsweise ein Teil der verfügbaren Leistungsänderung für die frequenzabhängige Regelung der Leistung verwendet wird und ein verbleibender Teil der veränderbaren Leistung für die Frequenzgradientenregelung verwendet wird.

Vorzugsweise wird vorgeschlagen, dass der Aktivierungsgrad zum Einstellen der Frequenzgradientenregelung im unteren Anteilsbereich von einem kleinen Wert von maximal 10%, insbesondere 0%, mit zunehmendem Umrichteranteil ansteigt, im mittleren Anteilsbereich einen maximalen Wert, insbesondere 100%, erreicht, und mit weiter zunehmendem Umrichteranteil wieder abfällt und im oberen Anteilsbereich einen kleinen Wert von maximal 10%, insbesondere 0% erreicht. Dadurch kann die Frequenzgradientenregelung fokussiert auf den mittleren Anteilsbereich angewendet werden.

Insbesondere wird vorgeschlagen, dass zum Einstellen der Frequenzgradientenregelung die Frequenzgradientenregelung mit dem Aktivierungsgrad multipliziert wird. Hierzu kann somit auf einfache Art und Weise zur anteilsweisen Aktivierung der Leistungseinspeisung, die in Abhängigkeit von einem Frequenzgradienten verändert wird, der Leistungswert dieser Leistungseinspeisung mit dem Aktivierungsgrad multipliziert werden.

Gemäß einer Ausführungsform wird vorgeschlagen, dass mit einem maximalen Aktivierungsgrad im oberen Anteilsbereich, insbesondere als eine Stützregelung, eine frequenzabhängige Leistungsregelung aktiviert wird, bei der die eingespeiste Leistung in Abhängigkeit von der Netzfrequenz gemäß einer vorbestimmten Regelungsvorschrift verändert wird, und die Regelungsvorschrift eine Regelungsverstärkung aufweist und/oder durch eine Regelungsgeschwindigkeit gekennzeichnet ist, die in Abhängigkeit vom Umrichteranteil und/oder in Abhängigkeit von einem bzw. dem Lastflussmaß verändert werden. Insbesondere wird die Regelungsverstärkung umso größer eingestellt, je größer der Umrichteranteil ist, und/oder die Regelungsgeschwindigkeit wird umso schneller eingestellt, je größer der Umrichteranteil ist.

Vorzugsweise wird in Abhängigkeit von dem Lastflussmaß der Zusammenhang zwischen Regelungsverstärkung bzw. Regelungsgeschwindigkeit und dem Umrichteranteil verändert. Besonders kann eine Erhöhung der Regelungsverstärkung in Abhängigkeit von dem Umrichteranteil über einen Proportionalitätsfaktor zusammenhängen, also als Rampe ausgebildet sein. Dieser Proportionalitätsfaktor bzw. eine Steigung der Rampe kann dann in Abhängigkeit von dem Lastflussmaß verändert werden. Hier wird besonders vorgeschlagen, dass der Proportionalitätsfaktor bzw. die Steigung der Rampe umso größer ist, je kleiner das Lastflussmaß ist. Gleiches gilt für die Regelungsgeschwindigkeit, die auf gleiche Art und Weise wie die Regelungsverstärkung in Abhängigkeit von dem Umrichteranteil und in Abhängigkeit von dem Lastflussmaß eingestellt werden kann.

Hier wurde besonders erkannt, dass die frequenzabhängige Einstellung der Leistung umso stärker eingestellt wird, je größer der Umrichteranteil und je kleiner das Lastflussmaß ist. Besonders in einem Inselnetz ist der Betrag des Lastflussmaßes klein, das Lastflussmaß nämlich null. Hier kann es keinen Ausgleich durch angrenzende Netzabschnitte geben, sodass die netzfrequenzabhängige Leistungseinstellung entsprechend stärker reagieren muss, um die Regelungsmöglichkeit durch den fehlenden Lastfluss bzw. fehlenden Leistungsfluss auszugleichen. Ebenfalls sollte die frequenzabhängige Einstellung der Leistung umso stärker ausfallen, also eine umso stärkere Verstärkung aufweisen, je höher der Umrichteranteil ist, um nämlich eine entsprechende Regelungsfähigkeit durch wenige oder gar keine direkt gekoppelten Synchrongeneratoren aufzuweisen.

Gemäß einer Ausgestaltung wird vorgeschlagen, dass mit einem maximalen Aktivierungsgrad im oberen Anteilsbereich und bei Verwendung eines Windenergiesystems, insbesondere als eine Stützregelung, eine Momentanreserveregelung aktiviert wird, bei der in Abhängigkeit von der Netzfrequenz bei Werten der Netzfrequenz unterhalb eines unteren Frequenzreferenzwertes kinetische Energie aus wenigstens einem rotierenden Rotor entnommen und in das elektrische Versorgungsnetz eingespeist wird. Somit wird vorgeschlagen, eine solche Momentanreserveregelung im oberen Anteilsbereich vorzusehen, insbesondere diese nur oder überwiegend im oberen Anteilsbereich vorzusehen.

Hier wurde erkannt, dass besonders durch eine solche Momentanreserveregelung ein Ausgleich geschaffen werden kann für die verringerte Frequenzstabilisierung durch den geringen Anteil direkt gekoppelter Synchrongeneratoren an diesem Netzabschnitt. Besonders ist vorgesehen, dass die Momentanreserveregelung bei abfallender Netzfrequenz aktiviert wird.

Insbesondere wird vorgeschlagen, dass der Aktivierungsgrad zum Einstellen der Momentanreserveregelung und/oder der frequenzabhängigen Leistungsregelung, im unteren Anteilsbereich einen kleinen Wert von maximal 10% aufweist, insbesondere 0%, im mittleren Anteilsbereich von einem kleinen Wert von maximal 10%, insbesondere 0%, mit zunehmendem Umrichteranteil ansteigt, insbesondere erst ab einem Anteilsbereich ansteigt, der um maximal 10% unterhalb des zweiten Referenzwertes liegt, und einen maximalen Wert, insbesondere 100%, im oberen Anteilsbereich erreicht, und mit weiter zunehmendem Umrichteranteil bis 100% seinen maximalen Wert behält. Dadurch wird die Aktivierung, besonders durch den Werteverlauf des Aktivierungsgrades, so vorbereitet, dass die Momentanreserveregelung besonders im oberen Anteilsbereich, also für große Umrichteranteile stark oder vollständig aktiviert wird.

Besonders wird vorgeschlagen, dass zum Einstellen der Momentanreserveregelung oder der frequenzabhängigen Leistungsregelung die Momentanreserveregelung bzw. die frequenzabhängige Leistungsregelung mit dem Aktivierungsgrad multipliziert wird.

Somit kann besonders vorgesehen sein, dass eine maximale Aktivierung erst bei einem sehr hohen Umrichteranteil im Netz erfolgt. Die Anwendung des Aktivierungsgrades kann hier bedeuten, dass ein Zusammenhang zwischen der Frequenzabweichung, um die die Netzfrequenz unterhalb des unteren Frequenzreferenzwertes liegt, und der Leistung, die davon abhängig zusätzlich in das elektrische Versorgungsnetz eingespeist wird, durch einen Verstärkungszusammenhang, insbesondere Verstärkungsfaktor, insbesondere Proportionalitätsfaktor gekennzeichnet sein kann. Für diesen Verstärkungszusammenhang, Verstärkungsfaktor, bzw. Proportionalitätsfaktor kann ein maximaler Wert vorgesehen sein und der wird eingestellt, wenn der Aktivierungsgrad 100 % beträgt. Insbesondere kann dieser Verstärkungszusammenhang proportional zum Aktivierungsgrad gewählt werden.

Gemäß einer Ausführungsform wird vorgeschlagen, dass mit einem maximalen Aktivierungsgrad im oberen Anteilsbereich, insbesondere als eine Stützregelung, eine Trägheitswinkelregelung aktiviert wird, wobei die Trägheitswinkelregelung ein Referenzsystem betreibt, bei dem eine virtuelle Schwungmasse mit einer der Netzfrequenz entsprechenden Drehzahl rotiert und daraus ein Referenzsignal mit einer Referenzfrequenz und einer Phasenlage in Bezug auf die Netzspannung abgeleitet wird, wobei die Rotation der virtuellen Schwungmasse einer Änderung der Netzfrequenz nur träge folgt, sodass sich bei einer Änderung der Netzfrequenz die Phasenlage des Referenzsignals verändert und die Trägheitswinkelregelung eine Leistungseinspeisung in Abhängigkeit von der Phasenlage des Referenzsignals steuert. Insbesondere wird vorgeschlagen, dass ein Teil der eingespeisten Leistung proportional zur Phasenlage gesteuert wird. Dass die Rotation der virtuellen Schwungmasse einer Änderung der Netzfrequenz nur träge folgt, wird dadurch realisiert, dass sie der Änderung der Netzfrequenz mit einer Verzögerungsfunktion folgt. Die Verzögerungsfunktion kann insbesondere eine Verzögerungsfunktion erster Ordnung sein.

Hier wurde besonders erkannt, dass durch diese Trägheitswinkelregelung im oberen Anteilsbereich der umrichterbasierte Erzeuger an das Verhalten eines direkt gekoppelten Synchrongenerators angepasst werden kann. Beim oberen Anteilsbereich liegt ein sehr hoher Umrichteranteil vor, bei dem nur noch wenige oder gar keine direkt gekoppelten Synchrongeneratoren in den Netzabschnitt einspeisen, sodass ihre physikalisch bedingte Stabilisierungswirkung entfällt, zumindest stark reduziert ist. Das kann durch eine solche Trägheitswinkelregelung zumindest teilweise kompensiert werden, die somit besonders für den oberen Anteilsbereich vorgeschlagen wird.

Insbesondere wird vorgeschlagen, dass die virtuelle Schwungmasse durch ein Trägheitsmoment gekennzeichnet ist, das einstellbar ist und dass die Verzögerungsfunktion eine Hochlaufzeitkonstante aufweist, die proportional zum Trägheitsmoment ist. Wird das Trägheitsmoment also beispielsweise doppelt so groß gewählt, so ist die Hochlaufzeitkonstante der Verzögerungsfunktion auch doppelt so groß. Mit anderen Worten wird das Verhalten der virtuellen Schwungmasse und damit das Referenzsystem und damit die Trägheitswinkelregelung insgesamt doppelt so träge. Dadurch kann ein Verhalten eines direkt gekoppelten Synchrongenerators nachgebildet werden und auch unterschiedlich träge Verhalten können berücksichtigt werden. Vorzugsweise wird das einstellbare Trägheitsmoment in Abhängigkeit davon eingestellt, wie groß der Anteil direkt gekoppelter Synchrongeneratoren in dem Netzabschnitt ist. Dazu wird vorgeschlagen, dass das Trägheitsmoment umso größer gewählt wird, je kleiner der Anteil direkt gekoppelter Synchrongeneratoren im Netzabschnitt ist. Dadurch kann das Fehlen direkt gekoppelter Synchrongeneratoren entsprechend stark ausgeglichen werden. Das kann über den Aktivierungsgrad erreicht werden, der mit dem Trägheitsmoment multipliziert werden kann.

Insbesondere wird vorgeschlagen, dass der Aktivierungsgrad zum Einstellen der Trägheitswinkelregelung im unteren Anteilsbereich einen kleinen Wert von maximal 10% aufweist, insbesondere 0% aufweist, im mittleren Anteilsbereich von einem kleinen Wert von maximal 10%, insbesondere 0%, mit zunehmendem Umrichteranteil ansteigt, und im oberen Anteilsbereich einen maximalen Wert, insbesondere 100%, erreicht, und mit weiter zunehmendem Umrichteranteil bis 100% seinen maximalen Wert behält.

Vorzugsweise kann zum Einstellen der Trägheitswinkelregelung die Trägheitswinkelregelung mit dem Aktivierungsgrad multipliziert werden. Auch die Trägheitswinkelregelung weist eine Übertragungsfunktion auf, besonders eine, die einen Zusammenhang zwischen Frequenzänderung und eingespeister Leistung wiedergibt. Mit einer solchen Übertragungsfunktion kann der Aktivierungsgrad multipliziert werden.

Besonders wird vorgeschlagen, dass das Trägheitsmoment in Abhängigkeit von einem Arbeitspunkt des umrichterbasierten Erzeugers gewählt wird, insbesondere dass es in Abhängigkeit von der eingespeisten Leistung gewählt wird. Durch die vom umrichterbasierten Einspeiser eingespeisete Leistung kann sein Arbeitspunkt ganz oder teilweise definiert sein, so dass die Betrachtung der eingespeisten Leistung vorgeschlagen wird. Es kann bei der Betrachtung der eingespeisten Leistung die durch die Trägheitswinkelregelung zusätzlich eingespeiste Leistung herausgerechnet werden, so dass nur die so bereinigte Leistung betrachtet wird, insbesondere die Leistung, die eingespeist wird, bevor die Trägheitswinkelregelung aktiv wird. Dadurch kann vermieden werden, dass eine instabile Regelung eintritt, bei der die Trägheitswinkelregelung zu einer höheren Leistung führt, die zu einem erhöhten Trägheitsmoment führt, das wiederum die Leistung weiter erhöht. Die instabile Regelung kann aber auch durch eine geeignete Parametrierung vermieden werden.

Hier wurde besonders erkannt, dass die Anpassung des virtuellen Trägheitsmomentes an den Arbeitspunkt erreichen kann, dass die Trägheitswinkelregelung umso stärker ist, je größer die eingespeiste Leistung ist, je einflussreicher also in dem Moment der umrichterbasierte Einspeiser ist. Insbesondere wird daher vorgeschlagen, das Trägheistmoment umso größer zu wählen, je größer die von dem umrichterbasierten Einspeiser eingespeiste Leistung ist.

Gemäß einer Ausgestaltung wird vorgeschlagen, dass mit einem maximalen Aktivierungsgrad im oberen Anteilsbereich, insbesondere als eine Stützregelung, eine von der Netzspannung abhängige Leistungseinspeisung vorgesehen ist, die eine eingespeiste Leistung oder einen Teil davon in Abhängigkeit von einer Spannungsabweichung der Netzspannung von einer Referenzspannung, insbesondere in Abhängigkeit von einer Netznennspannung, vorgibt und einspeist. Hier wurde besonders erkannt, dass diese von der Netzspannung abhängige Leistungseinspeisung für den oberen Anteilsbereich vorgesehen ist, wenn der Anteil direkt gekoppelter Synchrongeneratoren in dem Netzabschnitt gering ist. Direkt gekoppelte Synchrongeneratoren weisen üblicherweise auch spannungsprägende Eigenschaften auf. Durch den geringen Anteil direkt gekoppelter Synchrongeneratoren in dem Netzabschnitt ist diese spannungsprägende Eigenschaft somit auch abgeschwächt. Das kann durch diese netzspannungsabhängige Leistungseinspeisung zumindest teilweise kompensiert werden. Durch die netzspannungsabhängige Leistungseinspeisung kann somit eine Spannungsstabilisierung erreicht werden.

Es wird darauf hingewiesen, dass hier eine von der Netzspannung abhängige Wirkleistungseinspeisung vorgeschlagen wird. Damit kann die Netzspannung insgesamt stabilisiert oder sogar vorgegeben werden. Das unterscheidet sich besonders von einer netzspannungsabhängigen Blindleistungseinspeisung - die zusätzlich vorgesehen sein kann -, die eine Netzspannung eher in Bezug auf eine konkrete, insbesondere lange Leitung beeinflusst, nämlich besonders einen Spannungsabfall entlang dieser langen Leitung kompensiert.

Insbesondere wird vorgeschlagen, dass ein Leistungsteil der eingespeisten Leistung proportional zur Spannungsabweichung vorgegeben und eingespeist wird. Grundsätzlich soll Leistung, also Wirkleistung, auch dann eingespeist werden, wenn keine Spannungsabweichung vorliegt, schließlich ist das Sinn eines Erzeugers. Zur Spannungsstützung wird aber vorgeschlagen, dass ein Teil der eingespeisten Leistung, nämlich der genannte Leistungsteil, für diesen Regelungszweck eingesetzt wird und damit der Leistungsteil proportional zur Spannungsabweichung vorgegeben und eingespeist wird. Das kommt dann also zu der ansonsten eingespeisten Wirkleistung hinzu bzw. wird abgezogen, je nach Vorzeichen. Durch die zur Spannungsabweichung proportionale Vorgabe kann besonders eine schnelle Reaktion auf Spannungsabweichungen erreicht werden. Vorzugsweise wird vorgeschlagen, dass zusätzlich ein weiterer Teil der eingespeisten Leistung in Abhängigkeit von einem integralen Teil der Spannungsabweichung vorgegeben und eingespeist wird. Hier wird also vorgeschlagen, dass zumindest teilweise bzw. unter Berücksichtigung von Grenzwerten die Spannungsabweichung über die Zeit aufintegriert wird. Abhängig davon, insbesondere proportional dazu, wird der weitere Teil der eingespeisten Leistung vorgegeben und eingespeist. Dadurch können stationäre Spannungsabweichungen auch dauerhaft ausgeregelt werden.

Vorzugsweise wird vorgeschlagen, dass der Aktivierungsgrad zum Einstellen der von der Netzspannung abhängigen Leistungseinspeisung im unteren Anteilsbereich einen kleinen Wert von maximal 10% aufweist, insbesondere 0%, im mittleren Anteilsbereich von einem kleinen Wert von maximal 10%, insbesondere 0%, mit zunehmendem Umrichteranteil ansteigt, insbesondere erst ab einem Anteilsbereich ansteigt, der um maximal 10% - 20% unterhalb des zweiten Referenzwertes liegt, im oberen Anteilsbereich einen maximalen Wert, insbesondere 100%, erreicht, insbesondere erst ab einem Anteilsbereich von 90% erreicht. Damit wird diese von der Netzspannung abhängige Leistungseinspeisung besonders für den oberen Anteilsbereich vorgesehen, und selbst dort erst mit steigendem Umrichteranteil nach und nach aktiviert.

Vorzugsweise wird zum Einstellen der von der Netzspannung abhängigen Leistungseinspeisung die von der Netzspannung abhängige Leistungseinspeisung mit dem Aktivierungsgrad multipliziert. Hier kann besonders die Übertragungsfunktion und/oder die damit vorgegebene Leistung mit dem Aktivierungsgrad multipliziert werden.

Gemäß einer Ausgestaltung wird vorgeschlagen, dass mit einem maximalen Aktivierungsgrad im oberen Anteilsbereich, insbesondere als eine Stützregelung, eine von der Netzspannung abhängige Blindleistungseinspeisung vorgesehen ist, die die eingespeiste Blindleistung oder einen Teil davon in Abhängigkeit von einer Spannungsabweichung der Netzspannung von einer Referenzspannung, insbesondere in Abhängigkeit von einer Netznennspannung, vorgibt und einspeist, wobei wenigstens ein Teil der eingespeisten Blindleistung in Abhängigkeit von einem integralen Teil der Spannungsabweichung, insbesondere proportional dazu, vorgegeben und eingespeist wird.

Hier wurde besonders erkannt, dass es vorteilhaft ist, wenn diese Blindleistungseinspeisung im oberen Anteilsbereich verwendet wird, wenn Erzeuger, die die Netzspannung auf einen Spannungssollwert führen, kaum noch vorhanden sind, so dass die Spannung dann nicht mehr oder nun noch schlecht auf den vorgegebenen Spannungswert, insbesondere auf die Nennspannung geführt wird. Bekannte spannungsstützende Maßnahmen, die von Windenergieanlagen ausgeführt werden, sprechen nur außerhalb eines Toleranzbandes an und können keine stationäre Genauigkeit erreichen. Sie können die Spannung allenfalls in das Toleranzband zurückführen, aber meist nicht auf den Spannungssollwert. Diese Situation kann durch die nun vorgeschlagene Regelung verbessert werden.

Vorzugsweise wird vorgeschlagen, dass der Aktivierungsgrad zum Einstellen der von der Netzspannung abhängigen Blindleistungseinspeisung im unteren Anteilsbereich einen kleinen Wert von maximal 10% aufweist, insbesondere 0%, im mittleren Anteilsbereich von einem kleinen Wert von maximal 10%, insbesondere 0%, mit zunehmendem Umrichteranteil ansteigt, insbesondere erst ab einem Anteilsbereich ansteigt, der um maximal 10% - 20% unterhalb des zweiten Referenzwertes liegt, im oberen Anteilsbereich einen maximalen Wert, insbesondere 100%, erreicht, insbesondere erst ab einem Anteilsbereich von 90% erreicht. Damit wird diese von der Netzspannung abhängige Blindleistungseinspeisung besonders für den oberen Anteilsbereich vorgesehen, und selbst dort erst mit steigendem Umrichteranteil nach und nach aktiviert.

Vorzugsweise wird zum Einstellen der von der Netzspannung abhängigen Blindleistungseinspeisung die von der Netzspannung abhängige Blindleistungseinspeisung mit dem Aktivierungsgrad multipliziert. Hier kann besonders die Übertragungsfunktion und/oder die damit vorgegebene Blindleistung mit dem Aktivierungsgrad multipliziert werden.

Gemäß einer Ausführungsform wird vorgeschlagen, dass mit einem maximalen Aktivierungsgrad im oberen Anteilsbereich, insbesondere als eine Stützregelung, eine Vorhalteleistung aktiviert wird, bei der eine Vorhalteleistung als Leistungsreserve vorgehalten wird, indem der umrichterbasierte Erzeuger um eine Drosselleistung betrieben wird. Hier wurde besonders erkannt, dass der sehr hohe Umrichteranteil, auch meist bedeutet, dass ein Großteil der Leistung aus regenerativen Quellen stammt, nämlich insbesondere aus Wind- und Solarenergie. Solche Erzeuger arbeiten klassischerweise im sogenannten Netzparallelbetrieb. Das bedeutet, dass sie so viel Leistung in das elektrische Versorgungsnetz einspeisen wie aufgrund der regenerativen Energiequelle in dem Moment möglich ist, also abhängig von vorherrschenden Wind und der vorhandenen Solarleistung. Diese Systeme können ihre Leistung somit nicht oder nur unter besonderen Bedingungen erhöhen. Das wird üblicherweise durch direkt gekoppelte Synchrongeneratoren ausgeglichen, die üblicherweise zu nicht regenerativen Energiequellen gehören und damit bei Bedarf ihre Leistung erhöhen können, sofern sie nicht bereits Maximalleistung einspeisen.

Dies kann dadurch ausgeglichen werden, dass die umrichterbasierten Erzeuger gedrosselt betrieben werden, also so betrieben werden, dass sie eine Vorhalteleistung bereithalten. Eine Vorhalteleistung bereitzuhalten bedeutet, regenerative Energie zu verschenken. Daher wird ein solcher Betriebsmodus möglichst vermieden. Es wurde aber erkannt, dass im oberen Anteilsbereich ein solcher Betrieb angezeigt sein kann.

Insbesondere wenn der umrichterbasierte Erzeuger ein Windenergiesystem ist, wird vorgeschlagen, dass dieses in Höhe der Drosselleistung weniger Leistung aus dem Wind erzeugt als aufgrund eines vorherrschenden Windes möglich wäre, um bei Bedarf den gedrosselten Betrieb zu verlassen und die eingespeiste Leistung um die Drosselleistung, oder einen Teil davon, zu erhöhen. Dadurch wird besonders erreicht, dass diese Leistungserhöhung auch dauerhaft möglich ist, wenn auch zu dem Preis, dass Leistung verschenkt wird. Zum Erreichen der Stabilisierung des elektrischen Versorgungsnetzes kann ein solcher Nachteil aber hinnehmbar sein. Daher wird er besonders nur im oberen Anteilsbereich vorgeschlagen.

Vorzugsweise ist vorgesehen, dass der Aktivierungsgrad zum Einstellen der Vorhaltesteuerung im unteren Anteilsbereich von einem kleinen Wert von maximal 10%, insbesondere 0%, mit zunehmendem Umrichteranteil ansteigt, im mittleren Anteilsbereich der Wert mit zunehmendem Umrichteranteil weiter ansteigt, und im oberen Anteilsbereich einen maximalen Wert, insbesondere 100%, erreicht, und mit weiter zunehmendem Umrichteranteil bis 100% seinen maximalen Wert behält. Dadurch kann die Vorhaltesteuerung schon bei kleinen Umrichteranteilen aktiviert werden, aber nur mit geringer Amplitude. Es wird dann also wenig Energie verschenkt. Bei sehr hohen Umrichteranteilen ist die Aktivierung dann groß, insbesondere der Aktivierungsgrad maximal. Es wird dann zwar viel Energie verschenkt, dafür ist das Bereithalten dieser Vorhalteleistung dann besonders wichtig.

Vorzugsweise wird zum Einstellen der Vorhaltesteuerung die Vorhaltesteuerung mit dem Aktivierungsgrad multipliziert. Die Vorhaltesteuerung kann dadurch eine Übertragungsfunktion aufweisen, dass die Vorhalteleistung in Abhängigkeit von einer Frequenzabweichung, oder einfach in Abhängigkeit eines Anforderungssignals eingestellt wird. Diese Übertragungsfunktion kann mit dem Aktivierungsgrad multipliziert werden. Alternativ kann der für die Vorhalteleistung ermittelte Wert mit dem Aktivierungsgrad multipliziert werden.Gemäß einer Ausgestaltung wird vorgeschlagen, dass mit einem maximalen Aktivierungsgrad im oberen Anteilsbereich, insbesondere als eine Stützreglung, ein Spannungsprägungsmodus aktiviert wird, der synonym auch als Spannungsprägung oder Spannungsprägungsregelung bezeichnet werden kann. Umrichterbasierte Erzeuger werden üblicherweise stromprägend betrieben. Sie erhalten einen Stromsollwert und speisen diesen in das elektrische Versorgungsnetz ein. Eine Spannungsprägung wird üblicherweise von direkt gekoppelten Synchrongeneratoren durchgeführt, die eine solche spannungsprägende Eigenschaft physikalisch bedingt aufweisen.

Eine Spannungsprägung bzw. einen spannungsprägenden Modus für umrichterbasierte Erzeuger vorzusehen kann besonders so realisiert werden, dass eine entsprechend andere Regelung implementiert ist, wobei vorzugsweise zwischen stromprägender Regelung und spannungsprägender Regelung gewechselt werden kann; der hier vorgeschlagene spannungsprägende Modus muss somit nicht dauerhaft vorliegen, kann also aktiviert werden und entsprechend auch deaktiviert werden. Jedenfalls kann die Regelung, die zu diesem spannungsprägenden Modus führt, einen Spannungswert vorgeben und die Einspeisung wird dann entsprechend so geregelt, dass dieser Spannungswert erreicht wird.

Hier ist besonders zu beachten, dass ein spannungsprägender Modus für einen umrichterbasierten Erzeuger bedeuten kann, dass sehr viel Regelungsleistung benötigt wird. Entsprechend muss auch viel Regelungsleistung, also entsprechend viel Wirkleistung, für diesen Modus bereitgehalten werden. Das ist zwar möglich, aber ineffizient, sodass es möglichst vermieden wird. Hier wurde aber erkannt, dass im oberen Anteilsbereich, bei dem eine Spannungsprägung durch direkt gekoppelte Synchrongeneratoren nur schwach oder gar nicht vorhanden ist, dies hinnehmbar ist, um eine Stabilisierung sicherstellen zu können. Daher wird dieser Spannungsprägungsmodus besonders im oberen Anteilsbereich vorgeschlagen.

Besonders wird vorgeschlagen, dass der umrichterbasierte Erzeuger mehrere Wechselrichter zum Erzeugen jeweils eines Teils der eingespeisten Leistung aufweist. Dazu wird vorgeschlagen, dass bei Aktivierung des Spannungsprägungsmodus wenigstens einer der Wechselrichter von einem stromprägenden Betrieb in einen spannungsprägenden Betrieb wechselt. Insoweit kann der spannungsprägende Betrieb, der hier den Betrieb jeweils eines einzelnen Wechselrichters betrifft, alternativ auch als spannungsprägender Modus dieses einzelnen Wechselrichters bezeichnet werden.

Wie viele Wechselrichter oder umrichterbasierte Erzeuger im spannungsprägenden Modus betrieben werden, kann über den Aktivierungsgrad festgelegt werden. Insbesondere kann ihre Anzahl proportional zum Aktivierungsgrad eingestellt werden. Sollten die Wechselrichter bzw. Erzeuger unterschiedlich sein, insbesondere unterschiedlich große Nennleistungen aufweisen, kann diese Größe bzw. ihre Nennleistung bei der Aktivierung in Abhängigkeit vom Aktivierungsgrad mit berücksichtigt werden.

Jedenfalls kann hierdurch erreicht werden, dass ein Spannungsprägungsmodus aktiviert wird, ohne dass aber der gesamte umrichterbasierte Erzeuger mit allen Wechselrichtern nur noch im spannungsprägenden Modus arbeitet. Stattdessen arbeitet der umrichterbasierte Erzeuger teilweise spannungsprägend. Hier liegt besonders der Gedanke zugrunde, dass nicht nur ein umrichterbasierter Erzeuger, sondern viele umrichterbasierte Erzeuger, insbesondere alle in diesen Netzabschnitt einspeisenden umrichterbasierten Erzeuger teilweise, also einen oder mehrere ihrer Wechselrichter, in den stromprägenden Betrieb ändern. In der Summe vieler so arbeitender umrichterbasierter Erzeuger kann damit wirkungsvoll eine Spannungsprägung erreicht werden und der geringe Anteil direkt gekoppelter Synchrongeneratoren hinsichtlich der Spannungsprägung ausgeglichen werden.

Vorzugsweise wird vorgeschlagen, dass der Aktivierungsgrad zum Einstellen des Spannungsprägungsmodus im unteren Anteilsbereich einen kleinen Wert von maximal 10%, insbesondere 0%, aufweist, im mittleren Anteilsbereich einen kleinen Wert von maximal 10%, insbesondere 0%, aufweist, und im oberen Anteilsbereich von einem kleinen Wert von maximal 10%, insbesondere 0%, mit zunehmendem Umrichteranteil bis zu einem maximalen Wert, insbesondere 100%, ansteigt. Somit wird vorgeschlagen, die Spannungsprägung nur für den oberen Anteilsbereich vorzusehen. Auch dort wird die Spannungsprägung aber nach und nach mit steigendem Umrichteranteil erhöht, sodass der Spannungsprägungsmodus möglichst erst vollständig aktiviert ist, wenn auch der Umrichteranteil im Wesentlichen 100% erreicht hat.

Wie oben erläutert, kann zum Einstellen des Spannungsprägungsmodus eine Anzahl Wechselrichter oder umrichterbasierter Erzeuger in Abhängigkeit vom Aktivierungsgrad verwendet werden. Besonders wird vorgeschlagen, dass umso mehr Wechselrichter oder umrichterbasierte Erzeuger verwendet werden, je größer der Aktivierungsgrad ist.

Gemäß einer Ausführungsform ist vorgesehen, dass mit einem maximalen Aktivierungsgrad im unteren Anteilsbereich, insbesondere als eine Stützregelung, eine Bedämpfungsregelung aktiviert wird.

Hierfür ist vorgesehen, dass eine niederfrequente Schwingung im elektrischen Versorgungsnetz erfasst wird, die insbesondere eine Schwingung einer Amplitude der Netzspannung bezeichnet, die eine geringere Frequenz als eine Netznennfrequenz aufweist. Besonders kann, um es anschaulich zu erläutern, eine Schwingung des Effektivwertes der Netzspannung vorliegen. Die niederfrequente Schwingung kann insbesondere einen Bereich von 0,02 Hz bis 25 Hz erreichen, insbesondere von 0,1 Hz -bis 10 Hz.

Es wird zudem vorgeschlagen, eine Bedämpfung der erfassten niederfrequenten Schwingung durchzuführen. Somit wird eine solche gezielte Erfassung niederfrequenter Schwingung und Bedämpfung dieser Schwingungen in dem unteren Anteilsbereich und damit bei einem vergleichsweise geringen Umrichteranteil vorgeschlagen.

Es wurde besonders erkannt, dass solche niederfrequenten Schwingungen durch direkt mit dem Netzabschnitt gekoppelte Synchrongeneratoren hervorgerufen sein können. Solche direkt gekoppelten Synchrongeneratoren können schwingen und dann zu solchen niederfrequenten Schwingungen führen. Hier wurde erkannt, dass ein solches Schwingen besonders dann relevant ist und gegebenenfalls sogar zum Aufschwingen neigt, wenn direkt gekoppelte Synchrongeneratoren die dominanten Einspeiser des Netzabschnitts sind. Daher wird vorgeschlagen, im unteren Anteilsbereich und damit bei geringem Umrichteranteil und damit hohem Anteil direkt gekoppelter Synchrongeneratoren diese Bedämpfungsregelung zu verwenden und damit die Erfassung der niederfrequenten Schwingungen und ihre Bedämpfung durchzuführen.

Hier wurde besonders erkannt, dass es vorteilhaft sein kann, im mittleren und oberen Anteilsbereich eine solche Erfassung niederfrequenter Schwingungen mit anschließender Bedämpfung nicht durchzuführen. Dadurch kann dann nämlich vermieden werden, dass andere Regelungskonzepte, die im mittleren oder oberen Anteilsbereich wichtiger sind, in den Hintergrund gedrängt oder abgeschwächt werden. Zudem ist zu berücksichtigen, sollten niederfrequente Schwingungen in relevantem Maß auch für einen hohen Umrichteranteil auftreten, dass diese möglicherweise andere Ursachen haben und daher möglicherweise auch anders bedämpft werden müssen. Bei der Bedämpfung im unteren Anteilsbereich kann bei solchen niederfrequenten Schwingungen davon ausgegangen werden, dass diese durch die direkt gekoppelten Synchrongeneratoren verursacht sind und entsprechend kann die Bedämpfung daran angepasst werden.

Die Bedämpfung kann besonders so durchgeführt werden, dass elektrische Leistung antizyklisch zur erfassten niederfrequenten Schwingung eingespeist wird. Insbesondere kann elektrische Leistung in einer oszillierenden Weise eingespeist werden, indem besonders einer eingespeisten Grundleistung ein schwingendes Leistungssignal überlagert wird, sodass die Amplitude der eingespeisten Leistung um einen Wert schwingt. Diese schwingende Amplitude schwingt dabei mit einer Frequenz, die der Frequenz der niederfrequenten Schwingung entspricht, und zudem eine Phasenlage aufweist, die gegenüber einer Phasenlage der niederfrequenten Schwingung verschoben ist.

Das genannte antizyklische Schwingen entspräche somit einer Phasenverschiebung um 180°. Es kommt dabei in Betracht, dass ein Winkel von 180° nicht ideal ist, sondern der Winkel kann auch im Bereich von 90° liegen. Ein geeigneter Winkel, um den die Phasenlage der schwingenden Leistung gegenüber der niederfrequenten Schwingung im Netz verschoben ist, um ein gutes Dämpfungsergebnis zu erhalten, kann durch Simulation ermittelt werden.

Zur Aktivierung wird besonders vorgeschlagen, dass der Aktivierungsgrad zum Einstellen der Bedämpfungsregelung im unteren Anteilsbereich, insbesondere bei einem Umrichteranteil von 0-10%, von einem großen Wert von wenigstens 90%, insbesondere 100%, mit zunehmendem Umrichteranteil abfällt, insbesondere noch im unteren Anteilsbereich auf 0-10% abfällt, im mittleren Anteilsbereich einen kleinen Wert von maximal 10%, insbesondere 0%, aufweist, und im oberen Anteilsbereich einen kleinen Wert von maximal 10%, insbesondere 0% aufweist. Möglichst soll der Aktivierungsgrad von 100% am Anfang des unteren Anteilsbereichs auf 0% am Ende des unteren Anteilsbereichs abgefallen sein. Die Bedämpfungsregelung kann im mittleren und oberen Anteilsbereich deaktiviert sein.

Vorzugsweise wird zum Einstellen der Bedämpfungsregelung die Bedämpfungsregelung mit dem Aktivierungsgrad multipliziert. Die Bedämpfungsregelung kann besonders eine Übertragungsfunktion zwischen einer erfassten Schwingungsamplitude und einer Amplitude einer zur Bedämpfung einzuspeisenden oszillierenden Leistung aufweisen. Diese Übertragungsfunktion kann mit dem Aktivierungsgrad multipliziert werden. Es kommt auch in Betracht, dass einfach das zur Bedämpfung bestimmte Leistungssignal mit dem Aktivierungsgrad multipliziert wird.

Insbesondere wird somit vorgeschlagen, dass die Emulationsfunktion, die Leistungsabregelungsfunktion, die Frequenzgradientenregelung, die frequenzabhängige Leistungsregelung, die Momentanreserveregelung, die Trägheitswinkelregelung, die von der Netzspannung abhängige Leistungseinspeisung, die Vorhaltesteuerung, die Bedämpfungsregelung und der Spannungsprägungsmodus jeweils eine Stützregelung bzw. Stützfunktion bilden. Ihre Einstellung, insbesondere über die Multiplikation mit dem Aktivierungsgrad, ist somit eine Einstellung der Stützregelung und damit eine Aktivierung der Stützregelung mit dem Aktivierungsgrad.

Gemäß einer Ausführungsform wird vorgeschlagen, dass unter den nicht mittels Umrichter einspeisenden Erzeugern eine dominierende Kraftwerksart des Netzabschnitts erfasst wird, wobei als Kraftwerksart nicht mittels Umrichter einspeisender Erzeuger wenigstens zwischen einem Grundlastkraftwerk und einem Regelkraftwerk unterschieden wird, insbesondere wenigstens zwischen einem Kernkraftwerk, einem Kohlekraftwerk, einem Gaskraftwerk und einem Wasserkraftwerk unterschieden wird, und diejenige Kraftwerksart die dominierende Kraftwerksart bildet, die unter den nicht mittels Umrichter einspeisenden Erzeugern die meiste Leistung in den Netzabschnitt einspeisen kann. Ein Grundlastkraftwerk ist eines, das eine Grundlast versorgt, also langfristig, insbesondere wenigstens über Tage, einen im Wesentlichen festen Leistungswert einspeist und für diesen größere Änderungen nur über einen längeren Zeitraum vorgesehen sind. Änderungen der eingespeisten Leistung um mehr als 50%, bezogen auf Nennleistung, bedürfen einer Zeit von mehreren Stunden. Kernkraftwerke und Kohlekraftwerke können als Grundlastkraftwerk angesehen werden. Im Gegensatz dazu ist ein Regelkraftwerk eines, das seine Leistungseinspeisung schnell ändern kann. Eine Änderung der Leistung von über 50%, bezogen auf Nennleistung, sind in weniger als einer Stunde möglich, oftmals in einer Viertelstunde. Gaskraftwerke und Wasserkraftwerke können als Regelkraftwerke angesehen werden.

Als Unterscheidung zwischen einem Grundlastkraftwerk und einem Regelkraftwerk kann somit auch zwischen einem Kernkraftwerk oder einem Kohlekraftwerk als Grundlastkraftwerk einerseits, und einem Gaskraftwerk oder einem Wasserkraftwerk als Regelkraftwerk andererseits unterschieden werden. Nachfolgend werden Erläuterungen zu den genannten vier einzelnen Kraftwerken gegeben, die sinngemäß auf eine entsprechende Klassifizierung nach Grundlastkraftwerk einerseits und Regelkraftwerk andererseits übertragbar ist. Merkmale und Vorschläge, die zu einem Kernkraftwerk oder einem Kohlekraftwerk geschrieben wurden, sind somit auch auf ein Grundlastkraftwerk anwendbar. Merkmale und Vorschläge, die zu einem Gaskraftwerk oder einem Wasserkraftwerk geschrieben wurden, sind somit auch auf ein Regelkraftwerk anwendbar.

Dazu wird nun vorgeschlagen, dass in Abhängigkeit von der dominierenden Kraftwerksart der erste oder zweite Referenzwert ausgewählt wird und/oder wenigstens eine Ergänzungsregelung ausgewählt und eingesetzt wird.

Es wird also zunächst vorgeschlagen, die Erzeuger in Kraftwerksarten zu klassifizieren, die nicht zu den umrichterbasierten Erzeugern gehören. Beträgt der Umrichteranteil also beispielsweise 70 %, so werden die Erzeuger der verbleibenden 30 % entsprechend klassifiziert. Hier wurden besonders vier relevante Kraftwerksarten, die synonym auch als Kraftwerkstypen bezeichnet werden können, identifiziert, deren Verhalten sich teilweise grundlegend unterscheiden kann, sodass hier eine gesonderte Berücksichtigung vorgeschlagen wird.

Als dominierende Kraftwerksart wird diejenige betrachtet, die die meiste Leistung einspeisen kann. Speist also beispielsweise ein Kernkraftwerk mit 4 GW Nennleistung ein und zwei Kohlekraftwerke mit je 3 GW Nennleistung, und sind sonst keine nicht mittels Umrichter einspeisende Erzeuger vorhanden, bildet dann die Kraftwerksart Kohlekraftwerk die dominierende Kraftwerksart. Von einer einspeisbaren Leistung wird allerdings nur dann ausgegangen, wenn das jeweilige Kraftwerk tatsächlich auch an den Netzabschnitt angeschlossen ist und elektrische Leistung einspeist, auch wenn diese nicht ihre Nennleistung aufweist. Dann kann aber die Nennleistung als einspeisbare Leistung betrachtet werden.

Abhängig von der so festgestellten dominierenden Kraftwerksart wird dann vorgeschlagen, den ersten oder zweiten Referenzwert auszuwählen.

Außerdem oder alternativ wird vorgeschlagen, dass wenigstens eine Ergänzungsregelung in Abhängigkeit von der dominierenden Kraftwerksart ausgewählt und eingesetzt wird. Beispielsweise kommen hier auch Ergänzungsregelungen in Betracht, die nur oder speziell für einen Anteilsbereich vorgesehen sind. Beispielsweise kann das Aktivieren eines Spannungsprägungsmodus eine solche Ergänzungsregelung sein. Auch das Aktivieren einer Vorhaltesteuerung kann das Auswählen und Einsetzen einer solchen Ergänzungsregelung sein. Auch eine Leistungsabregelungsfunktion zur schnellen Leistungsabregelung kann eine Ergänzungsregelung sein.

So wurde erkannt, dass ein Kernkraftwerk eine stetige, Leistung einspeist, die möglichst nicht schnell verändert werden sollte. Das Netz kann dadurch stabilisiert werden, ein solches Kernkraftwerk sollte aber auf Leistungssprünge, wenn beispielsweise ein großer Verbraucher sich plötzlich vom Netz trennt, möglichst nicht schnell reagieren. Entsprechend wird besonders dann, wenn die dominierende Kraftwerksart ein Kernkraftwerk ist, vorgeschlagen, eine Leistungsabregelungsfunktion zur schnellen Leistungsabregelung zu implementieren. Das kann auch dann sinnvoll sein, wenn ein solches Kraftwerk mit seiner Mindestbelastung betrieben wird, oder kurz darüber, die ein weiteres Abregeln nicht zulässt. Außerdem oder alternativ wird vorgeschlagen, den ersten Referenzwert eher niedrig und den zweiten Referenzwert eher hoch zu wählen, damit eher Aktivierungen des mittleren Anteilsbereichs ausgewählt werden.

Ein Kohlekraftwerk verhält sich eher ähnlich zu einem Kernkraftwerk und kann ebenfalls eine stabile Leistung einspeisen, die wiederum auch nur sehr langsam verändert werden kann. Dabei kann ein Kohlekraftwerk im Vergleich zu einem Kernkraftwerk seinen Betrieb noch etwas schneller ändern, bzw. eine schnelle Änderung ist weniger schädlich für das Kraftwerk. Somit wird, wenn die dominierende Kraftwerksart ein Kohlekraftwerk ist, vorgeschlagen, wie beim Kernkraftwerk eher Stützregelungen aus dem mittleren Anteilsbereich auszuwählen und/oder eine Leistungsabregelungsfunktion zur schnellen Leistungsabregelung zu implementieren. Im Vergleich zum Kernkraftwerk als dominierende Kraftwerksart kann beim Kohlekraftwerk als dominierende Kraftwerksart vorzugsweise eine Reglerparametrierung, besonders bei einer schnellen Leistungsabregelung, vorgenommen werden, die zu einer langsameren Reaktion führt. Es können also größere Zeitkonstanten bzw. kleinere Reglerverstärkungen ausgewählt werden.

Sowohl bei einem Kernkraftwerk als auch bei einem Kohlekraftwerk als dominierende Kraftwerksart wird zudem vorgeschlagen, eine Vorhaltesteuerung zu aktivieren, um auf Leistungssprünge von Verbrauchern im Netz reagieren zu können. Besonders ein plötzlich erhöhter Leistungsbedarf, welcher über den von den Kraftwerken auf einfache Art und Weise bereitgestellten Reservebedarf hinaus geht, der durch ein zugeschaltetes Kraftwerk entstehen kann, kann dadurch berücksichtigt werden.

Ist ein Gaskraftwerk die dominierende Kraftwerksart, so braucht keine Vorhaltesteuerung vorgesehen zu sein, denn ein Gaskraftwerk kann sehr schnell, jedenfalls im Vergleich zu einem Kernkraftwerk und einem Kohlekraftwerk, seine Leistung erhöhen oder verringern und weist ein breiteres Band zur Leistungsflexibilität auf. Darüber hinaus ist eine stabilisierende Wirkung eines Gaskraftwerkes möglicherweise größer, sodass diese von den umrichterbasierten Erzeugern erst später übernommen werden muss. Somit wird besonders vorgeschlagen, bei einem Gaskraftwerk als dominierende Kraftwerksart keinen Spannungsprägungsmodus zu aktivieren und/oder den zweiten Referenzwert höher zu wählen.

Ein Wasserkraftwerk ist von den genannten nicht mittels Umrichter einspeisenden Erzeugern die Kraftwerksart, die zumindest im Durchschnitt am schnellsten ihre Leistung ändern kann, wobei hier anders als bei den anderen Kraftwerken eine lange Totzeit vorzusehen ist. Entsprechend kann auch hier, ähnlich wie bei dem Gaskraftwerk als dominierende Kraftwerksart, auf eine Vorhaltesteuerung verzichtet werden und/oder eine Spannungsprägung vorgesehen sein. Im Vergleich zum Gaskraftwerk als dominierende Kraftwerksart kann für das Wasserkraftwerk als dominierende Kraftwerksart grundsätzlich eine Reglerparametrierung vorgesehen sein, die zu einem schnelleren Regler als beim Gaskraftwerk führt. Um die Totzeit zu überbrücken, kann aber eine virtuelle Schwungmassenbereitstellung, oder eine schnelle Regelleistungsbereitstellung in den ersten Sekunden, insbesondere in den ersten 10 insbesondere in den ersten 5 Sekunden vorgesehen werden. Das kann besonders durch die Emulationsfunktion oder die Trägheitswinkelregelung erreicht werden.

Besonders für unteren Anteilsbereich wird vorgeschlagen, dass die Bedämpfung der niederfrequenten Schwingung von der dominierenden Kraftwerksart abhängig, oder in Abhängigkeit einer Gewichtung der vorhandenen Kraftwerkstypen durchgeführt wird. Besonders die Amplitude einer schwingenden Leistung, die zur Bedämpfung eingespeist wird, kann in Abhängigkeit von der dominierenden Kraftwerksart angepasst werden. Vorzugsweise ist sie bei einem Wasserkraftwerk als dominierende Kraftwerksart am größten, bei einem Gaskraftwerk als dominierende Kraftwerksart am zweitgrößten, bei einem Kohlekraftwerk als dominierende Kraftwerksart am drittgrößten und bei einem Kernkraftwerk als dominierende Kraftwerksart am geringsten. Ähnlich kann ein Differenzwinkel zwischen einem Phasenwinkel dieser schwingenden Leistung und der niederfrequenten Schwingung im Netz in Abhängigkeit von der dominierenden Kraftwerksart eingestellt werden.

Es wurde besonders erkannt, dass eine Empfindlichkeit gegen Pendelungen für Kraftwerke unterschiedlicher Kraftwerksart unterschiedlich sein kann. Besonders empfindlich können Wasserkraftwerke sein, weil sie durch die Pendelungen Druckstöße in der Wassersäule erfahren können. Am zweit empfindlichsten können Gasturbinen sein, weil die Pendelungen auf Verdichterpumpen wirken können und eine starke Beschleunigung der Schaufeln hervorrufen können. Unter die Kraftwerksart der Gasturbinen können auch Gas- und Dampf-Kombikraftwerke (GuD) gefasst werden, wobei ihre Empfindlichkeit noch etwas geringer sein kann.

Kohlekraftwerke haben eine noch geringere Empfindlichkeit und die von Kernkraftwerken ist unter den Kraftwerken am geringsten. Davon unabhängig kann zusätzlich die jeweilige Größe, insbesondere Nennleistung, der jeweiligen Kraftwerksblöcke berücksichtigt werden.

Erfindungsgemäß wird auch ein Windenergiesystem vorgeschlagen, nämlich ein Windenergiesystem zum Einspeisen elektrischer Leistung in ein eine Netzspannung mit einer Netzfrequenz aufweisendes elektrisches Versorgungsnetz, wobei das Windenergiesystem als umrichterbasierter Erzeuger ausgebildet ist, umfassend:
- eine Schätzeinrichtung zum Schätzen eines Umrichteranteils eines Netzabschnitts des elektrischen Versorgungsnetzes, wobei der Umrichteranteil ein Verhältnis mittels Umrichter eingespeister Leistung zu insgesamt eingespeister Leistung bezeichnet,
- eine Einspeiseeinrichtung zum Einspeisen elektrischer Leistung in das elektrische Versorgungsnetz in einem Normalmodus,
- eine Steuerungseinrichtung, vorbereitet zum Aktivieren wenigstens einer Stützregelung zum Stützen des elektrischen Versorgungsnetzes, wobei
- das Aktivieren in Abhängigkeit von dem Umrichteranteil erfolgt, wobei
- die wenigstens eine Stützregelung über einen Aktivierungsgrad einstellbar ist und
- der Aktivierungsgrad der wenigstens einen Stützregelung jeweils in Abhängigkeit des geschätzten Umrichteranteils abhängt.

Die Einspeiseeinrichtung kann besonders als Wechselrichtereinrichtung ausgebildet sein, die elektrische Leistung aus Wind in einem Gleichspannungszwischenkreis erhält und von diesem in das elektrische Versorgungsnetz einspeist. Eine solche Wechselrichtereinrichtung, besonders zusammen mit dem Gleichspannungszwischenkreis und einem Gleichrichter zum Speisen des Gleichspannungszwischenkreises, bildet somit einen Umrichter.

Dadurch ist das Windenergiesystem als umrichterbasierter Erzeuger ausgebildet. Ein umrichterbasierter Erzeuger kann synonym auch als umrichterbasierter Einspeiser bezeichnet werden.

Die Steuerungseinrichtung kann besonders als Prozessrechner ausgebildet sein und die Steuerungseinrichtung kann die Schätzeinrichtung beinhalten. Die Steuerungseinrichtung weist besonders Steuerungen oder Regelungen zur Umsetzung der jeweiligen Stützregelung auf, die als Software implementiert sein können.

Vorzugsweise ist das Windenergiesystem dazu eingerichtet, wenigstens ein Verfahren gemäß einer der vorstehenden Ausführungsformen eines Verfahrens zum Einspeisen umzusetzen. Insbesondere wird vorgeschlagen, dass die entsprechenden Schritte in der Steuerungseinrichtung implementiert sind. Lediglich das konkrete Ausführen des Einspeisens durch die Einspeiseeinrichtung erfolgt nicht durch die Steuerungseinrichtung, sondern durch einen entsprechenden Wechselrichter bzw. Umrichter, der aber durch die Steuerungseinrichtung gesteuert werden kann. Die Verfahrensschritte können besonders als Softwareprogramme oder Programmteile in dem Windenergiesystem, insbesondere in der Steuerungseinrichtung, implementiert sein. Lediglich das konkrete Einspeisen ist in der Einspeiseeinrichtung implementiert.

Nachfolgend wird die Erfindung beispielhaft anhand von Ausführungsformen unter Bezugnahme auf die begleitenden Figuren näher erläutert.
- Figur 1: zeigt eine Windenergieanlage in einer perspektivischen Darstellung.
- Figur 2: zeigt einen Windpark in einer schematischen Darstellung.
- Figur 3: zeigt ein Diagramm zur Veranschaulichung der Aktivierung verschiedener Regelungen in Abhängigkeit von einem Umrichteranteil.
- Figur 4: zeigt ein Diagramm zur Veranschaulichung der Aktivierung weiterer Regelungen in Abhängigkeit von einem Umrichteranteil.

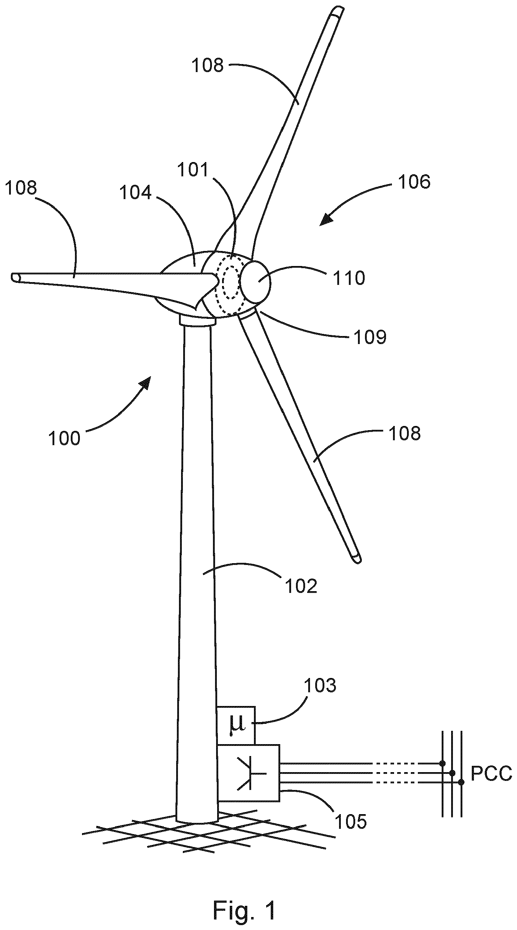

Figur 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen, die auch synonym als Steuerungseinrichtung bezeichnet werden kann. Die Anlagensteuerung 103 kann auch Vorgabewerte von extern, insbesondere von einem zentralen Parkrechner erhalten.

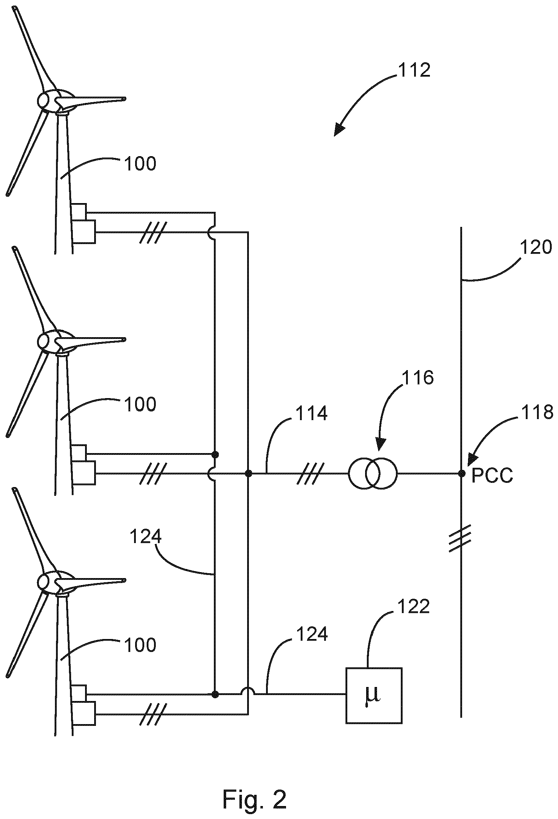

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112. Es kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

Der Windpark 112 weist zudem einen zentralen Parkrechner 122 auf, der synonym auch als zentrale Parksteuerung oder als Steuerungseinrichtung bezeichnet werden kann. Dieser kann über Datenleitungen 124, oder kabellos, mit den Windenergieanlagen 100 verbunden sein, um darüber mit den Windenergieanlagen Daten auszutauschen und insbesondere Messwerte von den Windenergieanlagen 100 zu erhalten und Steuerwerte an die Windenergieanlagen 100 zu übertragen.

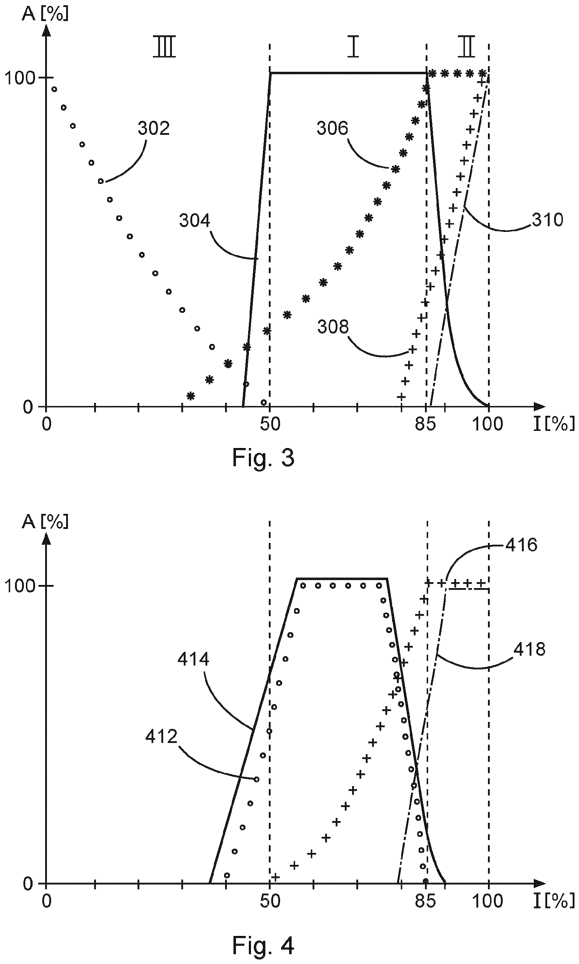

Figur 3 zeigt ein Diagramm, in dem an der Abszisse ein Umrichteranteil in Prozent exemplarisch aufgetragen ist. Die Ordinate veranschaulicht einen Aktivierungsgrad von 0 % bis 100 %. Damit wird angezeigt, dass manche Regelungen in unterschiedlicher Stärke aktiviert werden können. Besonders kann das bedeuten, dass Regelungen einer schwachen Aktivierung, also von wenigen Prozent, eine entsprechend schwache Reglerverstärkung aufweisen, bis hin zu einer maximal vorzusehenden Reglerverstärkung, die durch 100 % angezeigt wird. In anderen Fällen, besonders bei der Aktivierung einer Spannungsprägung, kann durch den Aktivierungsgrad gezeigt werden, wie viele Elemente, insbesondere wie viele Wechselrichter, die entsprechenden Regelungen aufweisen. Besonders für die Spannungsprägung kann vorgesehen sein, dass ein oder mehrere Wechselrichter eine Spannungsprägung durchführen. Die maximal vorzusehende Anzahl von Wechselrichtern für eine solche Spannungsprägung entspricht dann dem Aktivierungsgrad von 100 %.

In dem Beispiel der Figur 3 bildet ein Umrichteranteil von 50 % den ersten Referenzwert und ein Umrichteranteil von 85 % den zweiten Referenzwert.

Somit liegt hier der untere Anteilsbereich im Bereich von 0 - 50 %, der mittlere Anteilsbereich in dem Bereich zwischen 50 % und 85 %, und der obere Anteilsbereich im Bereich von 85 - 100 %.

Im unteren Anteilsbereich ist dabei eine Bedämpfung niederfrequenter Schwingungen als Bedämpfungsregelung vorgesehen. Diese ist durch einen Graphen 302 gezeigt. Es ist somit zu erkennen, dass diese Schwingungsbedämpfungsregelung 302 nur im unteren Anteilsbereich vorgesehen ist und ihr Aktivierungsgrad nimmt von einem Umrichteranteil von 0 % bis zu einem Umrichteranteil von 50 % von 100 % auf 0 % ab. Die Schwingungsbedämpfungsregelung wird somit nur vorgeschlagen, wenn ein großer Anteil direkt gekoppelter Synchrongeneratoren als schwingungsfähige Systeme im Netzabschnitt vorhanden ist und entsprechend das Netzverhalten bestimmt. Die Abnahme des Aktivierungsgrades kann hier proportional zu einer Amplitude eines oszillierend aufgeschalteten Leistungssignals sein. Bei 100 % hat diese oszillierende Leistungsamplitude somit den Maximalwert, der bis auf null absinken kann.

Für eine Frequenzgradientenregelung 304 ist in Figur 3 der Verlauf ihres Aktivierungsgrads eingezeichnet. Diese Frequenzgradientenregelung wird somit im mittleren Anteilsbereich vorgeschlagen. Dort wird sie zu 100 % aktiviert. Diese Frequenzgradientenregelung verändert die Leistungseinspeisung in Abhängigkeit von einem Frequenzgradienten. Insoweit verhindert die Frequenzgradientenregelung zu große Frequenzgradienten, wirkt ihnen zumindest entgegen.

Diese Frequenzgradientenregelung 304 ist im Grunde nur im mittleren Anteilsbereich vorgesehen. Es sind lediglich Übergangsbereiche vorgesehen, bei denen ein Aktivierungsgrad für die Frequenzgradientenregelung noch im Bereich des unteren Anteilsbereichs von null auf 100 % ansteigt und im oberen Anteilsbereich von 100 % auf null abfällt. Der Aktivierungsgrad von 100 % für die Frequenzgradientenregelung 304 in dem Diagramm der Figur 3 bedeutet besonders, dass ein Verstärkungsfaktor zwischen Frequenzgradienten und davon abhängig einzuspeisender Leistung einen Maximalwert annimmt.

In Figur 3 ist ein Graph 306 für eine Vorhaltesteuerung eingezeichnet. Bei dieser Vorhaltesteuerung wird eine Vorhalteleistung als Leistungsreserve vorgehalten, indem der umrichterbasierte Erzeuger um eine Drosselleistung gedrosselt betrieben wird. Bei einem Aktivierungsgrad von 100 % wird somit die meiste Vorhalteleistung bereitgestellt. Die kann beispielsweise 10 % oder 20 % der Nennleistung des umrichterbasierten Erzeugers betragen, aber auch auf aktuell einspeisbare Leistung durch den umrichterbasierten Erzeuger bezogen sein. Wird hier, um bei dem einen Beispiel zu bleiben, beispielsweise ein maximaler Wert von 20 % vorgesehen, bedeutet ein Aktivierungsgrad von 100 %, dass 20 % der Leistung als Vorhalteleistung bereitgestellt wird, die Anlage also um 20 % reduziert betrieben wird. Beträgt der Aktivierungsgrad 50 %, so wird entsprechend die Anlage nur um 10 % reduziert betrieben.

Diese Vorhaltesteuerung 306 ist somit mit dem Maximalwert für den oberen Anteilsbereich vorgesehen. Im mittleren Anteilsbereich kann die Vorhaltesteuerung 306 allmählich mit steigendem Umrichteranteil ebenfalls erhöht werden, um dann beim Übergang zum oberen Anteilsbereich den Aktivierungsgrad von 100 % zu erreichen. Es kommt auch in Betracht, dass bereits im unteren Anteilsbereich eine Vorhaltesteuerung 306 bereits mit einem geringen Aktivierungsgrad aktiviert ist.

Mit 308 ist ein Graph einer Aktivierung einer integralen Spannungsregelung eingezeichnet. Die integrale Spannungsregelung 308 ist eine Regelung, bei der ein Leistungsteil der eingespeisten Leistung in Abhängigkeit von einem integralen Teil einer Spannungsabweichung eingespeist wird, insbesondere proportional zu diesem integralen Teil eingespeist wird. Hierdurch wird durch die angepasste Leistungseinspeisung eine Spannungsregelung, zumindest Spannungsstabilisierung oder wenigstens Beeinflussung, erreicht. Der hierfür bei der integralen Spannungsregelung vorgesehene integrale Teil ist besonders für den oberen Anteilsbereich vorgesehen. Er kann bei einem geringen Aktivierungsgrad bereits im mittleren Anteilsbereich beginnen. Der Aktivierungsgrad bezeichnet hier eine Reglerverstärkung, die bei einem Aktivierungsgrad von 100 % maximal ist. Diese Reglerverstärkung kann besonders ein Proportionalitätsfaktor zwischen dem integralen Anteil und der davon abhängig zusätzlich eingespeisten Leistung bilden. Bei einem Aktivierungsgrad von 100 % ist dieser Verstärkungsfaktor bzw. Proportionalitätsfaktor maximal und bei einem Aktivierungsgrad von 0 % ist er null. Auch hier kommt in Betracht, die Übertragungsfunktion mit dem Aktivierungsgrad zu multiplizieren. Im linearen Fall kann sich dasselbe Ergebnis wie bei der Anpassung des Verstärkungsfaktors ergeben.

Die Spannungsregelung wird besonders vorgeschlagen, um die Spannung wieder in das Nennspannungsband zurückzuführen. Als Problem wurde erkannt, dass bei steigendem Umrichteranteil die Sensitivität der Spannung im Netz auf Blindleistungsänderungen steigt und oftmals keine Einspeiser im Netz sind, die die Spannung ins Band zurück fahren. Das kann besonders darin begründet sein, dass nur eine dynamische Netzstützung mit ausschließlich proportionalem Anteil und Totband vorhanden ist, die bei Abweichungen innerhalb des Totbandes gar nicht regelt und bei darüberhinausgehenden Abweichungen keine stationäre Genauigkeit erreicht.

Figur 3 veranschaulicht zudem einen Spannungsprägungsmodus durch den Graph 310. Dieser Spannungsprägungsmodus ist in dem oberen Anteilsbereich vorgesehen und kann auch synonym einfach als Spannungsprägung oder Spannungsprägungsregelung bezeichnet werden. Diese Spannungsprägung ist vorzugsweise, wie in Figur 3 dargestellt, nur für den oberen Anteilsbereich vorgesehen und sie wird zu Beginn des oberen Anteilsbereichs, also bei dem kleinsten Umrichteranteil des oberen Anteilsbereichs, von einem Aktivierungsgrad von 0 % auf einen Aktivierungsgrad von 100 % für einen Umrichteranteil von 100 % erhöht.

Der Aktivierungsgrad bedeutet hier besonders, wie viele Wechselrichter in dem Spannungsprägungsmodus spannungsprägend arbeiten. Bei einem Aktivierungsgrad von 100 % arbeitet also die maximale Anzahl von Wechselrichtern spannungsprägend, die von allen umrichterbasierten Erzeugern des Netzabschnitts potentiell zur Spannungsprägung vorgesehen sind. In einem Beispiel kann das auch bedeuten, was als eine bevorzugte Ausführungsform vorgeschlagen wird, dass bei einem Aktivierungsgrad von 100 % sämtliche Wechselrichter bzw. Umrichter spannungsprägend arbeiten. Vorzugsweise sind aber nicht alle Wechselrichter der umrichterbasierten Erzeuger dafür vorgesehen, sondern beispielsweise nur die Hälfte aller Wechselrichter bzw. Umrichter, und in dem Fall entspricht ein Aktivierungsgrad von 100 % dann dem Fall, bei dem die Hälfte aller Wechselrichter spannungsprägend arbeiten. Hier wurde erkannt, dass im oberen Anteilsbereich der Anteil direkt gekoppelter Synchrongeneratoren sehr gering ist, bei einem Umrichteranteil von 100 % sogar null ist, und daher die Eigenschaft der Spannungsprägung durch die umrichterbasierten Erzeuger bzw. einen Teil davon realisiert wird.

Figur 4 zeigt ein weiteres Diagramm von Regelungsvorschriften, die besonders in Abhängigkeit von dem Umrichteranteil vorgeschlagen werden und auch davon abhängig eingezeichnet sind. Das Diagramm der Figur 4 ist wie das Diagramm der Figur 3 aufgebaut und zur Veranschaulichung wurden auch der erste und der zweite Referenzwert wie im Beispiel der Figur 3 gewählt, nämlich mit 50 % bzw. 85 %. Figur 4 unterscheidet sich von Figur 3 insoweit nur darin, dass andere Regelungszusammenhänge dargestellt sind, die aber gleichzeitig mit den Regelungszusammenhängen aktiviert werden können, die in Figur 3 gezeigt sind. Figur 4 wurde insoweit nur gewählt, um Figur 3 nicht zu überladen.

Figur 4 zeigt einen Aktivierungsgrad einer Emulationsfunktion 412. Diese Emulationsfunktion 412 wird besonders im mittleren Anteilsbereichaktiviert. Ein Aktivierungsgrad von 100 % kann bedeuten, dass eine virtuelle Schwungmasse einen maximalen Wert annimmt, der maximal für diese Emulationsfunktion vorgesehen ist. Bei einem Aktivierungsgrad von 0 % ist somit der Wert der virtuellen Schwungmasse null und die Emulationsfunktion ist dadurch deaktiviert.

Weiterhin ist in Figur 4 der Graph einer Leistungsabregelungsfunktion zur schnellen Leistungsabregelung dargestellt und mit dem Bezugszeichen 414 versehen. Diese Leistungsabregelungsfunktion 414 kann auch als schnelle Leistungsabregelungsfunktion bezeichnet werden. Bei einem Aktivierungsgrad von 100 % weist diese Leistungsabregelungsfunktion 414 eine maximale Leistungsabregelung auf, die den schnellstmöglichen Wert, also die höchste Dynamik aufweist, die implementiert werden kann. Insbesondere kann dies bspw. ein Wert sein, bei dem die Leistung doppelt so schnell reduziert wird wie eine Eingangsleistung des entsprechenden umrichterbasierten Erzeugers reduziert werden kann. Insbesondere wird hier ein Windenergiesystem vorgesehen, und ein Aktivierungsgrad von 100 % kann bedeuten, dass die Leistung, die in das elektrische Versorgungsnetz eingespeist wird, doppelt so schnell reduziert wird wie das Windenergiesystem die Entnahme der Leistung aus Wind reduzieren kann.

Die schnelle Leistungsabregelungsfunktion 414 ist ebenfalls für den mittleren Anteilsbereichvorgesehen und kann insbesondere einen ähnlichen Aktivierungszusammenhang in Abhängigkeit von dem Umrichteranteil zeigen wie die Emulationsfunktion 412. Beide erreichen im Bereich des mittleren Anteilsbereichs die volle Aktivierung, also den Aktivierungsgrad 100%.

In Figur 4 ist auch eine frequenzabhängige Leistungsregelung 416 berücksichtigt und ihr Aktivierungsgrad in Abhängigkeit von dem Umrichteranteil durch den Graphen 416 veranschaulicht. Sie steuert eine zusätzlich einzuspeisende Leistung mit einer Amplitude, die gemäß einem frequenzabhängigen Verstärkungsfaktor proportional zu einer Frequenzabweichung ist. Die frequenzabhängige Leistungsregelung ist, zumindest als vollständige Aktivierung, nur für den oberen Anteilsbereich vorgesehen. Ein 100%iger Aktivierungsgrad kann bedeuten, dass ein frequenzabhängiger Verstärkungsfaktor, der einen Zusammenhang zwischen Frequenzabweichung und zusätzlich eingespeister Leistung herstellt, einen Maximalwert aufweist. Dieser kann bis zu einem Aktivierungsgrad von 0 % entsprechend auf null reduziert werden. Damit wäre die frequenzabhängige Leistungsregelung dann nicht mehr implementiert. Vorzugsweise kann ein solcher geringerer Aktivierungsgrad der frequenzabhängigen Leistungsregelung 416 im mittleren Anteilsbereich vorgesehen sein. Es ist aber auch möglich, dass eine frequenzabhängige Leistungsregelung 416 auch im unteren Anteilsbereich vorgesehen ist, insbesondere mit entsprechend geringer Verstärkung, also entsprechend geringem Aktivierungsgrad, oder großen Totbändern.

Vorzugsweise wird vorgeschlagen, dass eine Trägheitswinkelregelung mit einem Aktivierungsgrad aktiviert wird, der denselben Verlauf wie der Aktivierungsgrad 416 der frequenzabhängigen Leistungsregelung aufweist. Besonders wurde erkannt, dass die Trägheitswinkelregelung ebenfalls eine von der Frequenz abhängige Regelung ist und dabei bei ähnlichen oder gleichen Bedingungen wie die frequenzabhängige Leistungsregelung benötigt wird.

Figur 4 zeigt auch einen bevorzugten Aktivierungsverlauf einer Momentanreserveregelung 418. Eine maximale Aktivierung von 100 % kann bei der Momentanreserveregelung bedeuten, dass ein maximaler Verstärkungsfaktor gewählt wird, der einen Zusammenhang zwischen aus kinetischer Energie zusätzlich eingespeister elektrischer Leistung und einer Frequenzabweichung bezeichnet. Als Frequenzabweichung wird hierbei der Wert angesehen, um den die Netzfrequenz unterhalb eines unteren Frequenzreferenzwertes liegt. Die Aktivierung der Momentanreserveregelung 418 ist besonders für den oberen Anteilsbereichvorgesehen und erreicht hier den Wert 100 %.

Nur aus zeichnerischen Gründen liegt hier der Graph der Momentanreserveregelung 418 etwas unter dem der frequenzabhängigen Leistungsregelung 416. Tatsächlich sollen aber beide Graphen in dem gezeigten Beispiel den Maximalwert von 100 % erreichen. Die Momentanreserveregelung 418 kann vorzugsweise ausschließlich in dem oberen Anteilsbereich aktiviert werden. Die Aktivierung kann aber auch in den mittleren Anteilsbereich hineinreichen bzw. dort starten, insbesondere mit geringen Aktivierungsgraden, sodass der Aktivierungsgrad erst im oberen Anteilsbereich, also oberhalb des zweiten Referenzwertes, über 50% liegt.

## Patentansprüche

1. Verfahren zum Einspeisen elektrischer Leistung in ein eine Netzspannung mit einer Netzfrequenz aufweisendes elektrisches Versorgungsnetz (120) mittels eines umrichterbasierten Erzeugers (100, 112), insbesondere mittels eines Windenergiesystems (100, 112), umfassend die Schritte:
- Schätzen eines Umrichteranteils eines Netzabschnitts des elektrischen Versorgungsnetzes (120), wobei der Umrichteranteil ein Verhältnis mittels Umrichter eingespeister Leistung zu insgesamt eingespeister Leistung bezeichnet,
- Einspeisen elektrischer Leistung in das elektrische Versorgungsnetz (120) in einem Normalmodus,
- Aktivieren wenigstens einer Stützregelung zum Stützen des elektrischen Versorgungsnetzes (120), wobei
- das Aktivieren in Abhängigkeit von dem Umrichteranteil erfolgt, wobei
- die wenigstens eine Stützregelung jeweils über einen Aktivierungsgrad einstellbar ist und
- der Aktivierungsgrad der wenigstens einen Stützregelung jeweils von dem geschätzten Umrichteranteil abhängt,
**dadurch gekennzeichnet, dass**
- ein potentieller Anteilsbereich für den geschätzten Umrichteranteil in einem unteren, mittleren und oberen Anteilsbereich eingeteilt werden kann, wobei
- der untere Anteilsbereich unterhalb eines ersten Referenzwertes liegt,
- der mittlere Anteilsbereich beim ersten Referenzwert beginnt und bis zu einem zweiten Referenzwert liegt, der größer als der erste Referenzwert ist, und
- der obere Anteilsbereich oberhalb des zweiten Referenzwertes liegt, und mit einem maximalen Aktivierungsgrad im mittleren Anteilsbereich
- eine Emulationsfunktion (412) aktiviert wird, die auf eine Frequenzänderung der Netzfrequenz mit einer Leistungsänderung eingespeister Leistung reagiert, wobei die Leistungsänderung als Reaktion auf die Frequenzänderung einem Verhalten einer direkt mit dem elektrischen Versorgungsnetz (120) gekoppelten Synchronmaschine nachgebildet wird, wobei vorzugsweise eine virtuelle Schwungmasse mit einstellbarem Massenträgheitsmoment verwendet wird.

2. Verfahren nach Anspruch 1, **dadurch gekennzeichnet, dass**
- der Aktivierungsgrad einen vom Umrichteranteil abhängigen Werteverlauf aufweist,
- der Aktivierungsgrad jeweils Werte in einem Wertebereich von 0 bis 100% kontinuierlich oder in mehr als zwei Stufen, insbesondere in mehr als 5 Stufen, annehmen kann, wobei
- die jeweilige Stützregelung vollständig aktiviert ist, wenn ihr Aktivierungsgrad 100% beträgt, und
- die jeweilige Stützregelung deaktiviert ist, wenn ihr Aktivierungsgrad 0% beträgt, und insbesondere
- die Stützregelung durch eine Übertragungsfunktion gekennzeichnet ist, und der Aktivierungsgrad als Faktor auf die Übertragungsfunktion angewendet wird, oder alternativ, falls die Stützregelung durch mehrere Reglereinheiten umsetzbar ist, eine Anzahl der für die Stützregelung verwendeten Reglereinheiten von dem Aktivierungsgrad abhängt, sodass umso mehr Reglereinheiten verwendet werden, je größer der Aktivierungsgrad ist, und/oder
wobei insbesondere
- der erste Referenzwert im Bereich von 50-60% liegt, und/oder der zweite Referenzwert im Bereich von 80-95%.

3. Verfahren nach Anspruch 1 oder 2, **dadurch gekennzeichnet, dass**
- der erste Referenzwert und/oder der zweite Referenzwert in Abhängigkeit von einerweiteren Netzeigenschaft des elektrischen Versorgungsnetzes (120) gewählt werden, insbesondere
- in Abhängigkeit von einem Lastflussmaß, das einen maximalen Leistungsfluss zwischen dem Netzabschnitt und dem verbleibenden Teil des elektrischen Versorgungsnetzes (120) kennzeichnet.

4. Verfahren nach einem der vorstehenden Ansprüche, **dadurch gekennzeichnet, dass**
- der Aktivierungsgrad zum Einstellen der Emulationsfunktion (412)
- im unteren Anteilsbereich von einem kleinen Wert von maximal 10%, insbesondere 0%, mit zunehmendem Umrichteranteil ansteigt,
- im mittleren Anteilsbereich einen maximalen Wert, insbesondere 100%, erreicht, und
- mit weiter zunehmendem Umrichteranteil wieder abfällt und im oberen Anteilsbereich einen kleinen Wert von maximal 10%, insbesondere 0% erreicht, und/oder
- zum Einstellen der Emulationsfunktion die Emulationsfunktion mit dem Aktivierungsgrad multipliziert wird, und/oder
- eine Leistungsänderung eingespeister Leistung als Reaktion auf eine Frequenzänderung eine wenigstens doppelt so hohe Amplitude aufweist wie bei einer parallel arbeitenden frequenzabhängigen Leistungsregelung ohne Emulation einer Synchronmaschine bei gleicher Frequenzänderung, und/oder
- für eine Leistungsänderung eingespeister Leistung als Reaktion auf eine Frequenzänderung keine Mindestfrequenzabweichung der Netzfrequenz von einer Referenzfrequenz vorgegeben wird, oder dass eine vorbestimmte Mindestfrequenzabweichung zumindest geringer ist, als bei einer parallel arbeitenden frequenzabhängigen Leistungsregelung ohne Emulation einer Synchronmaschine.

5. Verfahren nach einem der vorstehenden Ansprüche, **dadurch gekennzeichnet, dass**
mit einem maximalen Aktivierungsgrad im mittleren Anteilsbereich
- eine Leistungsabregelungsfunktion (414) zur schnellen Leistungsabregelung implementiert ist, wobei die Leistungsabregelungsfunktion (414) auf ein Anforderungssignal oder Anforderungskriterium das Einspeisen elektrischer Leistung reduziert, und
- die Reduzierung der Leistung durch eine Reduzierungszeitkonstante gekennzeichnet ist, wobei die Reduzierungszeitkonstante eine Zeit bezeichnet, in der die Leistung um einen Nennleistungswert reduziert wird, wobei die Reduzierungszeitkonstante kleiner als 2, 1 oder 0,5 Sekunden ist, und dass insbesondere
- der Aktivierungsgrad zum Einstellen der Leistungsabregelungsfunktion (414)
- im unteren Anteilsbereich von einem kleinen Wert von maximal 10%, insbesondere 0%, mit zunehmendem Umrichteranteil ansteigt,
- im mittleren Anteilsbereich einen maximalen Wert, insbesondere 100%, erreicht, und
- mit weiter zunehmendem Umrichteranteil wieder abfällt und im oberen Anteilsbereich einen kleinen Wert von maximal 10%, insbesondere 0% erreicht, und/oder
- zum Einstellen der Leistungsabregelungsfunktion die Leistungsabregelungsfunktion (414) mit dem Aktivierungsgrad multipliziert wird, und/oder dass
- bei Verwendung eines Windenergiesystems (100, 112) als umrichterbasierter Erzeuger (100, 112) die Reduzierung der eingespeisten Leistung schneller ist, als eine Reduzierung mittels des Windenergiesystems (110, 112) aus Wind erzeugter Leistung, und/oder dass
- zum Reduzieren der eingespeisten Leistung Leistung im Windenergiesystem (100, 112) zusätzlich verbraucht wird, insbesondere mittels einer Chopperschaltung, und/oder dass
- die eingespeiste Leistung auf einen Wert unter null reduziert wird, sodass das Windenergiesystem (100, 112) Leistung aus dem elektrischen Versorgungsnetz (120) entnimmt und insbesondere, zumindest teilweise, mittels einer Chopperschaltung.

6. Verfahren nach einem der vorstehenden Ansprüche, **dadurch gekennzeichnet, dass**
mit einem maximalen Aktivierungsgrad im mittleren Anteilsbereich
- eine Frequenzgradientenregelung (304) aktiviert wird, wobei die Frequenzgradientenregelung (304) die Leistungseinspeisung in Abhängigkeit von einem Frequenzgradienten verändert, der eine Frequenzänderung pro Zeit quantitativ beschreibt, insbesondere einen Teil der eingespeisten Leistung proportional zur Frequenzänderung vorgibt, und dass insbesondere
- der Aktivierungsgrad zum Einstellen der Frequenzgradientenregelung (304)
- im unteren Anteilsbereich von einem kleinen Wert von maximal 10%, insbesondere 0%, mit zunehmendem Umrichteranteil ansteigt,
- im mittleren Anteilsbereich einen maximalen Wert, insbesondere 100%, erreicht, und
- mit weiter zunehmendem Umrichteranteil wieder abfällt und im oberen Anteilsbereich einen kleinen Wert von maximal 10%, insbesondere 0% erreicht, und/oder
- zum Einstellen der Frequenzgradientenregelung die Frequenzgradientenregelung (304) mit dem Aktivierungsgrad multipliziert wird.

7. Verfahren nach einem der vorstehenden Ansprüche, **dadurch gekennzeichnet, dass**
- mit einem maximalen Aktivierungsgrad im oberen Anteilsbereich eine frequenzabhängige Leistungsregelung (416) aktiviert wird, bei der die eingespeiste Leistung in Abhängigkeit von der Netzfrequenz gemäß einer vorbestimmten Regelungsvorschrift verändert wird, und die Regelungsvorschrift eine Regelungsverstärkung aufweist und/oder durch eine Regelungsgeschwindigkeit gekennzeichnet ist, die in Abhängigkeit vom Umrichteranteil und/oder in Abhängigkeit von einem bzw. dem Lastflussmaß verändert werden, und/oder dass
- mit einem maximalen Aktivierungsgrad im oberen Anteilsbereich und bei Verwendung eines Windenergiesystems (100, 112) eine Momentanreserveregelung (418) aktiviert wird, bei der in Abhängigkeit von der Netzfrequenz bei Werten der Netzfrequenz unterhalb eines unteren Frequenzreferenzwertes kinetische Energie aus wenigstens einem rotierenden Rotor (106) entnommen und in das elektrische Versorgungsnetz (120) eingespeist wird, und insbesondere
- der Aktivierungsgrad zum Einstellen der Momentanreserveregelung (418) und/oder der frequenzabhängigen Leistungsregelung (416),
- im unteren Anteilsbereich einen kleinen Wert von maximal 10% aufweist, insbesondere 0%,
- im mittleren Anteilsbereich von einem kleinen Wert von maximal 10%, insbesondere 0%, mit zunehmendem Umrichteranteil ansteigt, insbesondere erst ab einem Anteilsbereich ansteigt, der um maximal 10% unterhalb des zweiten Referenzwertes liegt, und einen maximalen Wert, insbesondere 100%, im oberen Anteilsbereich erreicht, und
- mit weiter zunehmendem Umrichteranteil bis 100% seinen maximalen Wert behält, und/oder
- zum Einstellen der Momentanreserveregelung (418) oder der frequenzabhängigen Leistungsregelung (416) die Momentanreserveregelung (418) bzw. die frequenzabhängige Leistungsregelung (416) mit dem Aktivierungsgrad multipliziert wird.

8. Verfahren nach einem der vorstehenden Ansprüche, **dadurch gekennzeichnet, dass**
mit einem maximalen Aktivierungsgrad im oberen Anteilsbereich eine Trägheitswinkelregelung aktiviert wird, wobei
- die Trägheitswinkelregelung ein Referenzsystem betreibt, bei dem eine virtuelle Schwungmasse mit einer der Netzfrequenz entsprechenden Drehzahl rotiert und
- daraus ein Referenzsignal mit einer Referenzfrequenz und einer Phasenlage in Bezug auf die Netzspannung abgeleitet wird, wobei
- die Rotation der virtuellen Schwungmasse einer Änderung der Netzfrequenz mit einer Verzögerungsfunktion folgt, sodass
- sich bei einer Änderung der Netzfrequenz die Phasenlage des Referenzsignals verändert und
- die Trägheitswinkelregelung eine Leistungseinspeisung in Abhängigkeit von der Phasenlage des Referenzsignals steuert, insbesondere
- einen Teil der eingespeisten Leistung proportional zur Phasenlage steuert, und/oder
- die virtuelle Schwungmasse durch ein Trägheitsmoment gekennzeichnet ist, das einstellbar ist, und
- die Verzögerungsfunktion eine Hochlaufzeitkonstante aufweist, die proportional zum Trägheitsmoment ist, wobei vorzugsweise
- das Trägheitsmoment in Abhängigkeit von einem Arbeitspunkt des umrichterbasierten Erzeugers (100, 112) insbesondere in Abhängigkeit von der eingespeisten Leistung gewählt wird, und insbesondere
- der Aktivierungsgrad zum Einstellen der Trägheitswinkelregelung
- im unteren Anteilsbereich einen kleinen Wert von maximal 10% aufweist, insbesondere 0%,
- im mittleren Anteilsbereich von einem kleinen Wert von maximal 10%, insbesondere 0%, mit zunehmendem Umrichteranteil ansteigt,
- im oberen Anteilsbereich einen maximalen Wert, insbesondere 100%, erreicht, und mit weiter zunehmendem Umrichteranteil bis 100% seinen maximalen Wert behält, und/oder
- zum Einstellen der Trägheitswinkelregelung die Trägheitswinkelregelung mit dem Aktivierungsgrad multipliziert wird.

9. Verfahren nach einem der vorstehenden Ansprüche, **dadurch gekennzeichnet, dass** mit einem maximalen Aktivierungsgrad im oberen Anteilsbereich
- eine von der Netzspannung abhängige Leistungseinspeisung (308) vorgesehen ist, die die eingespeiste Leistung oder einen Teil davon in Abhängigkeit von einer Spannungsabweichung der Netzspannung von einer Referenzspannung, insbesondere in Abhängigkeit von einer Netznennspannung, vorgibt und einspeist, wobei insbesondere
- ein Leistungsteil der eingespeisten Leistung proportional zur Spannungsabweichung vorgegeben und eingespeist wird, und insbesondere
- zusätzlich ein weiterer Teil der eingespeisten Leistung in Abhängigkeit von einem integralen Teil der Spannungsabweichung, insbesondere proportional dazu, vorgegeben und eingespeist wird, und insbesondere
- der Aktivierungsgrad zum Einstellen der von der Netzspannung abhängigen Leistungseinspeisung
- im unteren Anteilsbereich einen kleinen Wert von maximal 10% aufweist, insbesondere 0%,
- im mittleren Anteilsbereich von einem kleinen Wert von maximal 10%, insbesondere 0%, mit zunehmendem Umrichteranteil ansteigt, insbesondere erst ab einem Anteilsbereich ansteigt, der um maximal 10% - 20% unterhalb des zweiten Referenzwertes liegt,
- im oberen Anteilsbereich einen maximalen Wert, insbesondere 100%, erreicht, insbesondere erst ab einem Anteilsbereich von 90% erreicht, und/oder
- zum Einstellen der von der Netzspannung abhängigen Leistungseinspeisung die von der Netzspannung abhängige Leistungseinspeisung mit dem Aktivierungsgrad multipliziert wird.

10. Verfahren nach einem der vorstehenden Ansprüche, **dadurch gekennzeichnet, dass** mit einem maximalen Aktivierungsgrad im oberen Anteilsbereich
- eine von der Netzspannung abhängige Blindleistungseinspeisung (308) vorgesehen ist, die die eingespeiste Blindleistung oder einen Teil davon in Abhängigkeit von einer Spannungsabweichung der Netzspannung von einer Referenzspannung, insbesondere in Abhängigkeit von einer Netznennspannung, vorgibt und einspeist, wobei
- wenigstens ein Teil der eingespeisten Blindleistung in Abhängigkeit von einem integralen Teil der Spannungsabweichung, insbesondere proportional dazu, vorgegeben und eingespeist wird, und insbesondere
- der Aktivierungsgrad zum Einstellen der von der Netzspannung abhängigen Blindleistungseinspeisung
- im unteren Anteilsbereich einen kleinen Wert von maximal 10% aufweist, insbesondere 0%,
- im mittleren Anteilsbereich von einem kleinen Wert von maximal 10%, insbesondere 0%, mit zunehmendem Umrichteranteil ansteigt, insbesondere erst ab einem Anteilsbereich ansteigt, der um maximal 10% - 20% unterhalb des zweiten Referenzwertes liegt,
- im oberen Anteilsbereich einen maximalen Wert, insbesondere 100%, erreicht, insbesondere erst ab einem Anteilsbereich von 90% erreicht, und/oder
- zum Einstellen der von der Netzspannung abhängigen Blindleistungseinspeisung die von der Netzspannung abhängige Leistungseinspeisung mit dem Aktivierungsgrad multipliziert wird.

11. Verfahren nach einem der vorstehenden Ansprüche, **dadurch gekennzeichnet, dass**
mit einem maximalen Aktivierungsgrad im oberen Anteilsbereich
- eine Vorhaltesteuerung (306) aktiviert wird, bei der eine Vorhalteleistung als Leistungsreserve vorgehalten wird, indem der umrichterbasierte Erzeuger (100, 112) um eine Drosselleistung gedrosselt betrieben wird, insbesondere das Windenergiesystem (100, 112) in Höhe der Drosselleistung weniger Leistung aus Wind erzeugt, als aufgrund eines vorherrschenden Windes möglich wäre, um bei Bedarf den gedrosselten Betrieb zu verlassen und die eingespeiste Leistung um die Drosselleistung, oder einen Teil davon, zu erhöhen, und insbesondere
- der Aktivierungsgrad zum Einstellen der Vorhaltesteuerung (306)
- im unteren Anteilsbereich von einem kleinen Wert von maximal 10%, insbesondere 0%, mit zunehmendem Umrichteranteil ansteigt,
- im mittleren Anteilsbereich der Wert mit zunehmendem Umrichteranteil weiter ansteigt,
- im oberen Anteilsbereich einen maximalen Wert, insbesondere 100%, erreicht, und mit weiter zunehmendem Umrichteranteil bis 100% seinen maximalen Wert behält, und/oder
- zum Einstellen der Vorhaltesteuerung die Vorhaltesteuerung (306) mit dem Aktivierungsgrad multipliziert wird.

12. Verfahren nach einem der vorstehenden Ansprüche, **dadurch gekennzeichnet, dass**
mit einem maximalen Aktivierungsgrad im oberen Anteilsbereich
- ein Spannungsprägungsmodus (310) aktiviert wird, wobei insbesondere der umrichterbasierte Erzeuger (100, 112) mehrere Wechselrichter zum Erzeugen jeweils eines Teils der eingespeisten Leistung aufweist und bei Aktivierung des Spannungsprägungsmodus (310) wenigstens einer der Wechselrichter von einem stromprägenden Betrieb in einen spannungsprägenden Betrieb wechselt, und insbesondere
- der Aktivierungsgrad zum Einstellen des Spannungsprägungsmodus (310)
- im unteren Anteilsbereich einen kleinen Wert von maximal 10%, insbesondere 0%, aufweist,
- im mittleren Anteilsbereich einen kleinen Wert von maximal 10%, insbesondere 0%, aufweist,
- im oberen Anteilsbereich von einem kleinen Wert von maximal 10%, insbesondere 0%, mit zunehmendem Umrichteranteil bis zu einem maximalen Wert, insbesondere 100%, ansteigt, und/oder
- zum Einstellen des Spannungsprägungsmodus (310) eine Anzahl Wechselrichter oder umrichterbasierte Erzeuger (100, 112) in Abhängigkeit vom Aktivierungsgrad verwendet wird.

13. Verfahren nach einem der vorstehenden Ansprüche, **dadurch gekennzeichnet, dass**
- mit einem maximalen Aktivierungsgrad im unteren Anteilsbereich eine Bedämpfungsregelung (302) aktiviert wird, wobei
- eine niederfrequente Schwingung im elektrischen Versorgungsnetz (120) erfasst wird, die insbesondere eine Schwingung einer Amplitude der Netzspannung bezeichnet, die eine geringere Frequenz als eine Netznennfrequenz aufweist, und
- eine Bedämpfung der erfassten niederfrequenten Schwingung durchgeführt wird, und insbesondere
- der Aktivierungsgrad zum Einstellen der Bedämpfungsregelung (302)
- im unteren Anteilsbereich, insbesondere bei einem Umrichteranteil von 0-10%, von einem großen Wert von wenigstens 90%, insbesondere 100%, mit zunehmendem Umrichteranteil abfällt, insbesondere noch im unteren Anteilsbereich auf 0-10% abfällt,
- im mittleren Anteilsbereich einen kleinen Wert von maximal 10%, insbesondere 0%, aufweist,
- im oberen Anteilsbereich einen kleinen Wert von maximal 10%, insbesondere 0% aufweist, und/oder
- zum Einstellen der Bedämpfungsregelung (302) die Bedämpfungsregelung mit dem Aktivierungsgrad multipliziert wird.

14. Verfahren nach einem der vorstehenden Ansprüche, **dadurch gekennzeichnet, dass**
- unter den nicht mittels Umrichter einspeisenden Erzeugern eine dominierende Kraftwerksart des Netzabschnitts erfasst wird, wobei
- als Kraftwerksart nicht mittels Umrichter einspeisender Erzeuger wenigstens zwischen einem Grundlastkraftwerk und einem Regelkraftwerk unterschieden wird, insbesondere wenigstens zwischen einem Kernkraftwerk, einem Kohlekraftwerk, einem Gaskraftwerk und einem Wasserkraftwerk unterschieden wird, und
- diejenige Kraftwerksart die dominierende Kraftwerksart bildet, die unter den nicht mittels Umrichter einspeisenden Erzeugern die meiste Leistung in den Netzabschnitt einspeisen kann, und
- in Abhängigkeit von der dominierenden Kraftwerksart der erste oder zweite Referenzwert ausgewählt wird und/oder wenigstens eine Ergänzungsregelung ausgewählt und eingesetzt wird.

15. Windenergiesystem (100, 112) zum Einspeisen elektrischer Leistung in ein eine Netzspannung mit einer Netzfrequenz aufweisendes elektrisches Versorgungsnetz (120), wobei das Windenergiesystem (100, 112) als umrichterbasierter Erzeuger (100, 112) ausgebildet ist, umfassend:
- eine Schätzeinrichtung zum Schätzen eines Umrichteranteils eines Netzabschnitts des elektrischen Versorgungsnetzes (120), wobei der Umrichteranteil ein Verhältnis mittels Umrichter eingespeister Leistung zu insgesamt eingespeister Leistung bezeichnet,
- eine Einspeiseeinrichtung (105) zum Einspeisen elektrischer Leistung in das elektrische Versorgungsnetz (120) in einem Normalmodus,
- eine Steuerungseinrichtung (103, 122), aufweisend Steuerungen oder Regelungen zur Umsetzung wenigstens einer Stützregelung und vorbereitet zum Aktivieren der wenigstens einen Stützregelung zum Stützen des elektrischen Versorgungsnetzes (120), wobei
- das Aktivieren in Abhängigkeit von dem Umrichteranteil erfolgt, wobei
- die wenigstens eine Stützregelung über einen Aktivierungsgrad einstellbar ist und
- der Aktivierungsgrad der wenigstens einen Stützregelung jeweils in Abhängigkeit des geschätzten Umrichteranteils abhängt,
**dadurch gekennzeichnet, dass**
- ein potentieller Anteilsbereich für den geschätzten Umrichteranteil in einem unteren, mittleren und oberen Anteilsbereich eingeteilt wird, wobei
- der untere Anteilsbereich unterhalb eines ersten Referenzwertes liegt,
- der mittlere Anteilsbereich beim ersten Referenzwert beginnt und bis zu einem zweiten Referenzwert liegt, der größer als der erste Referenzwert ist, und
- der obere Anteilsbereich oberhalb des zweiten Referenzwertes liegt, und
mit einem maximalen Aktivierungsgrad im mittleren Anteilsbereich
- eine Emulationsfunktion (412) aktiviert wird, die auf eine Frequenzänderung der Netzfrequenz mit einer Leistungsänderung eingespeister Leistung reagiert, wobei die Leistungsänderung als Reaktion auf die Frequenzänderung einem Verhalten einer direkt mit dem elektrischen Versorgungsnetz (120) gekoppelten Synchronmaschine nachgebildet wird, wobei vorzugsweise eine virtuelle Schwungmasse mit einstellbarem Massenträgheitsmoment verwendet wird.

16. Windenergiesystem (100, 112) nach Anspruch 15, **dadurch gekennzeichnet, dass** das Windenergiesystem (100, 112) dazu eingerichtet ist, ein Verfahren nach einem der Ansprüche 1 bis 14 auszuführen.

## Claims

1. A method for feeding electrical power into an electrical supply network (120) having a network voltage with a network frequency by means of a converter-based generator (100, 112), in particular by means of a wind power system (100, 112), comprising the following steps:
- estimating a converter proportion of a network section of the electrical supply network (120), wherein the converter proportion denotes a ratio of power fed in by means of converters to total power fed in,
- feeding electrical power into the electrical supply network (120) in a normal mode,
- activating at least one support control for supporting the electrical supply network (120), wherein
- the activating is effected depending on the converter proportion, wherein
- the at least one support control is adjustable in each case by way of a degree of activation, and
- the degree of activation of the at least one support control is dependent in each case on the estimated converter proportion,
**characterized in that**
- a potential proportion range for the estimated converter proportion can be classified in a lower, middle and upper proportion range, wherein
- the lower proportion range lies below a first reference value,
- the middle proportion range begins at the first reference value and extends as far as a second reference value, which is greater than the first reference value, and
- the upper proportion range lies above the second reference value, and
with a maximum degree of activation in the middle proportion range
- an emulation function (412) is activated, which reacts to a frequency change of the network frequency with a power change of fed-in power, wherein the power change as a reaction to the frequency change emulates a behavior of a synchronous machine coupled directly to the electrical supply network (120), wherein preferably a virtual centrifugal mass with adjustable mass moment of inertia is used.

2. The method as claimed in claim 1, wherein
- the degree of activation has a value profile dependent on the converter proportion,
- the degree of activation can in each case assume values in a value range of 0 to 100% continuously or in more than two steps, in particular in more than 5 steps, wherein
- the respective support control is fully activated if its degree of activation is 100%, and
- the respective support control is deactivated if its degree of activation is 0%, and in particular
- the support control is **characterized by** a transfer function, and the degree of activation is applied as factor to the transfer function, or alternatively, if the support control is implementable by a plurality of controller units, a number of the controller units used for the support control is dependent on the degree of activation, such that the greater the number of controller units used, the greater the degree of activation, and/or wherein in particular
- the first reference value lies in the range of 50-60%, and/or the second reference value lies in the range of 80-95%.

3. The method as claimed in claim 1 or 2, wherein
- the first reference value and/or the second reference value are/is chosen depending on a further network property of the electrical supply network (120), in particular
- depending on a load flow measure identifying a maximum power flow between the network section and the remaining part of the electrical supply network (120).

4. The method as claimed in any of the preceding claims, wherein
- the degree of activation for adjusting the emulation function (412)
- rises in the lower proportion range from a small value of a maximum of 10%, in particular 0%, as the converter proportion increases,
- reaches a maximum value, in particular 100%, in the middle proportion range, and
- falls again as the converter proportion increases further, and reaches a small value of a maximum of 10%, in particular 0%, in the upper proportion range, and/or
- for adjusting the emulation function, the emulation function is multiplied by the degree of activation, and/or
- a power change of fed-in power as a reaction to a frequency change has an amplitude at least double the magnitude of that in the case of a frequency-dependent power control operating in parallel without emulation of a synchronous machine for the same frequency change, and/or
- for a power change of fed-in power as a reaction to a frequency change, no minimum frequency deviation of the network frequency from a reference frequency is predefined, or wherein a predetermined minimum frequency deviation is at least smaller than in the case of a frequency-dependent power control operating in parallel without emulation of a synchronous machine.

5. The method as claimed in any of the preceding claims, wherein
with a maximum degree of activation in the middle proportion range
- a power limitation function (414) for rapid power limitation is implemented, wherein the power limitation function (414) reduces the infeed of electrical power in response to a request signal or request criterion, and
- the reduction of the power is **characterized by** a reduction time constant, wherein the reduction time constant denotes a time in which the power is reduced by a rated power value, wherein the reduction time constant is less than 2 seconds, 1 second or 0.5 seconds, and wherein in particular
- the degree of activation for adjusting the power limitation function (414)
- rises in the lower proportion range from a small value of a maximum of 10%, in particular 0%, as the converter proportion increases,
- reaches a maximum value, in particular 100%, in the middle proportion range, and
- falls again as the converter proportion increases further, and reaches a small value of a maximum of 10%, in particular 0%, in the upper proportion range, and/or
- for adjusting the power limitation function, the power limitation function (414) is multiplied by the degree of activation, and/or wherein
- with the use of a wind power system (100, 112) as converter-based generator (100, 112), the reduction of the fed-in power is more rapid than a reduction of power generated from wind by means of the wind power system (100, 112), and/or wherein
- for reducing the fed-in power, power is additionally consumed in the wind power system (100, 112), in particular by means of a chopper circuit, and/or wherein
- the fed-in power is reduced to a value below zero, such that the wind power system (100, 112) draws power from the electrical supply network (120), and in particular, at least partly, by means of a chopper circuit.

6. The method as claimed in any of the preceding claims, wherein
with a maximum degree of activation in the middle proportion range
- a frequency gradient control (304) is activated, wherein the frequency gradient control (304) alters the power infeed depending on a frequency gradient that quantitatively describes a frequency change per time, in particular predefines a portion of the fed-in power proportionally to the frequency change, and wherein in particular
- the degree of activation for adjusting the frequency gradient control (304)
- rises in the lower proportion range from a small value of a maximum of 10%, in particular 0%, as the converter proportion increases,
- reaches a maximum value, in particular 100%, in the middle proportion range, and
- falls again as the converter proportion increases further, and reaches a small value of a maximum of 10%, in particular 0%, in the upper proportion range, and/or
- for adjusting the frequency gradient control, the frequency gradient control (304) is multiplied by the degree of activation.

7. The method as claimed in any of the preceding claims, wherein
- with a maximum degree of activation in the upper proportion range a frequency-dependent power control (416) is activated, in which the fed-in power is altered depending on the network frequency in accordance with a predetermined control specification, and the control specification has a control gain and/or is **characterized by** a control speed, which are altered depending on the converter proportion and/or depending on a or the load flow measure, and/or wherein
- with a maximum degree of activation in the upper proportion range and with the use of a wind power system (100, 112), an instantaneous reserve control (418) is activated, in which depending on the network frequency, at values of the network frequency below a lower frequency reference value, kinetic energy is drawn from at least one rotating rotor (106) and fed into the electrical supply network (120), and in particular
- the degree of activation for adjusting the instantaneous reserve control (418) and/or the frequency-dependent power control (416)
- has a small value of a maximum of 10% in the lower proportion range, in particular 0%,
- rises in the middle proportion range from a small value of a maximum of 10%, in particular 0%, as the converter proportion increases, in particular rises only starting from a proportion range that lies below the second reference value by a maximum of 10%, and reaches a maximum value, in particular 100%, in the upper proportion range, and
- maintains its maximum value as the converter proportion increases further up to 100%, and/or
- for setting the instantaneous reserve control (418) or the frequency-dependent power control (416), the instantaneous reserve control (418) or the frequency-dependent power control (416) is multiplied by the degree of activation.

8. The method as claimed in any of the preceding claims, wherein
with a maximum degree of activation in the upper proportion range an inertial angle control is activated, wherein
- the inertial angle control operates a reference system, in which a virtual centrifugal mass rotates with a rotational speed corresponding to the network frequency, and
- that is used to derive a reference signal with a reference frequency and a phase angle in relation to the network voltage, wherein
- the rotation of the virtual centrifugal mass follows a change of the network frequency with a delay function, such that
- the phase angle of the reference signal varies as the network frequency changes, and
- the inertial angle control controls a power infeed depending on the phase angle of the reference signal, in particular
- controls a portion of the fed-in power proportionally to the phase angle, and/or
- the virtual centrifugal mass is distinguished by a moment of inertia that is adjustable, and
- the delay function has a ramp-up time constant that is proportional to the moment of inertia, wherein preferably
- the moment of inertia is chosen depending on an operating point of the converter-based generator (100, 112) , in particular depending on the fed-in power, and in particular
- the degree of activation for adjusting the inertial angle control
- has a small value of a maximum of 10%, in particular 0%, in the lower proportion range,
- rises in the middle proportion range from a small value of a maximum of 10%, in particular 0%, as the converter proportion increases,
- reaches a maximum value, in particular 100%, in the upper proportion range, and maintains its maximum value as the converter proportion increases further up to 100%, and/or
- for adjusting the inertial angle control, the inertial angle control is multiplied by the degree of activation.

9. The method as claimed in any of the preceding claims, wherein
with a maximum degree of activation in the upper proportion range
- a power infeed (308) dependent on the network voltage is provided, which predefines and feeds in the fed-in power or a portion thereof depending on a voltage deviation of the network voltage from a reference voltage, in particular depending on a rated network voltage, wherein in particular
- a power portion of the fed-in power proportional to the voltage deviation is predefined and fed in, and in particular
- additionally a further portion of the fed-in power depending on an integral portion of the voltage deviation, in particular proportional thereto, is predefined and fed in, and in particular
- the degree of activation for adjusting the power infeed dependent on the network voltage
- has a small value of a maximum of 10%, in particular 0%, in the lower proportion range,
- rises in the middle proportion range from a small value of a maximum of 10%, in particular 0%, as the converter proportion increases, in particular rises only starting from a proportion range that lies below the second reference value by a maximum of 10% - 20%,
- reaches a maximum value, in particular 100%, in the upper proportion range, in particular reaches it only starting from a proportion range of 90%, and/or
- for adjusting the power infeed dependent on the network voltage, the power infeed dependent on the network voltage is multiplied by the degree of activation.

10. The method as claimed in any of the preceding claims, wherein with a maximum degree of activation in the upper proportion range
- a reactive power infeed (308) dependent on the network voltage is provided, which predefines and feeds in the fed-in reactive power or a portion thereof depending on a voltage deviation of the network voltage from a reference voltage, in particular depending on a rated network voltage, wherein
- at least one portion of the fed-in reactive power depending on an integral portion of the voltage deviation, in particular proportional thereto, is predefined and fed in, and in particular
- the degree of activation for adjusting the reactive power infeed dependent on the network voltage
- has a small value of a maximum of 10%, in particular 0%, in the lower proportion range,
- rises in the middle proportion range from a small value of a maximum of 10%, in particular 0%, as the converter proportion increases, in particular rises only starting from a proportion range that lies below the second reference value by a maximum of 10% - 20%,
- reaches a maximum value, in particular 100%, in the upper proportion range, in particular reaches it only starting from a proportion range of 90%, and/or
- for adjusting the reactive power infeed dependent on the network voltage, the power infeed dependent on the network voltage is multiplied by the degree of activation.

11. The method as claimed in any of the preceding claims, wherein
with a maximum degree of activation in the upper proportion range
- a reserve control (306) is activated, in which a reserve power is reserved as power reserve by virtue of the fact that the converter-based generator (100, 112) is operated in a manner restricted by a restriction power, in particular the wind power system (100, 112) generates at the level of the restriction power less power from wind than would be possible on the basis of prevailing wind, in order as necessary to leave restricted operation and to increase the fed-in power by the restriction power, or a portion thereof, and in particular
- the degree of activation for adjusting the reserve control (306)
- rises in the lower proportion range from a small value of a maximum of 10%, in particular 0%, as the converter proportion increases,
- rises further in value in the middle proportion range as the converter proportion increases,
- reaches a maximum value, in particular 100%, in the upper proportion range, and maintains its maximum value as the converter proportion increases further up to 100%, and/or
- for adjusting the reserve control, the reserve control (306) is multiplied by the degree of activation.

12. The method as claimed in any of the preceding claims, wherein
with a maximum degree of activation in the upper proportion range
- a voltage impressing mode (310) is activated, wherein in particular the converter-based generator (100, 112) has a plurality of inverters for generating in each case a portion of the fed-in power and, upon activation of the voltage impressing mode (310), at least one of the inverters changes from current impressing operation to voltage impressing operation, and in particular
- the degree of activation for adjusting the voltage impressing mode (310)
- has a small value of a maximum of 10%, in particular 0%, in the lower proportion range,
- has a small value of a maximum of 10%, in particular 0%, in the middle proportion range,
- rises in the upper proportion range from a small value of a maximum of 10%, in particular 0%, up to a maximum value, in particular 100%, as the converter proportion increases, and/or
- for adjusting the voltage impressing mode (310), use is made of a number of inverters or converter-based generators (100, 112) depending on the degree of activation.

13. The method as claimed in any of the preceding claims, wherein
- with a maximum degree of activation in the lower proportion range a damping control (302) is activated, wherein
- a low-frequency oscillation in the electrical supply network (120) is detected, which denotes in particular an oscillation of an amplitude of the network voltage that has a lower frequency than a rated network frequency, and
- a damping of the low-frequency oscillation detected is carried out, and in particular
- the degree of activation for adjusting the damping control (302)
- falls in the lower proportion range, in particular in the case of a converter proportion of 0-10%, from a large value of at least 90%, in particular 100%, as the converter proportion increases, in particular falls to 0-10% while still in the lower proportion range,
- has a small value of a maximum of 10%, in particular 0%, in the middle proportion range,
- has a small value of a maximum of 10%, in particular 0%, in the upper proportion range, and/or
- for adjusting the damping control (302), the damping control is multiplied by the degree of activation.

14. The method as claimed in any of the preceding claims, wherein
- among the generators that do not use converters for infeed, a dominant type of power plant of the network section is detected, wherein
- as the type of power plant of generators that do not use converters for infeed, a distinction is drawn at least between a base load power plant and a regulation power plant, in particular a distinction is drawn at least between a nuclear power plant, a coal-fired power plant, a gas-fired power plant and a hydroelectric power plant, and
- that type of power plant which, among the generators that do not use converters for infeed, can feed the most power into the network section constitutes the dominant type of power plant,
- depending on the dominant type of power plant
the first or second reference value is selected and/or
at least one supplementary control is selected and used.

15. A wind power system (100, 112) for feeding electrical power into an electrical supply network (120) having a network voltage with a network frequency, wherein the wind power system (100, 112) is embodied as a converter-based generator (100, 112), comprising:
- an estimating device for estimating a converter proportion of a network section of the electrical supply network (120), wherein the converter proportion denotes a ratio of power fed in by means of converters to total power fed in,
- an infeed device (105) for feeding electrical power into the electrical supply network (120) in a normal mode,
- a control device (103, 122) comprising controls or feedback controls for implementing at least one support control and prepared for activating of the at least one support control for supporting the electrical supply network (120), wherein
- the activating is effected depending on the converter proportion, wherein
- the at least one support control is adjustable by way of a degree of activation, and
- the degree of activation of the at least one support control is dependent in each case on the estimated converter proportion,
**characterized in that**
- a potential proportion range for the estimated converter proportion is classified in a lower, middle and upper proportion range, wherein
- the lower proportion range lies below a first reference value,
- the middle proportion range begins at the first reference value and extends as far as a second reference value, which is greater than the first reference value, and
- the upper proportion range lies above the second reference value, and
with a maximum degree of activation in the middle proportion range
- an emulation function (412) is activated, which reacts to a frequency change of the network frequency with a power change of fed-in power, wherein the power change as a reaction to the frequency change emulates a behavior of a synchronous machine coupled directly to the electrical supply network (120), wherein preferably a virtual centrifugal mass with adjustable mass moment of inertia is used.

16. The wind power system (100, 112) as claimed in claim 15, wherein
the wind power system (100, 112) is configured to carry out a method as claimed in any of claims 1 to 14.

## Revendications

1. Procédé d'injection d'une puissance électrique dans un réseau d'alimentation électrique (120) présentant une tension de réseau avec une fréquence de réseau au moyen d'un générateur basé sur un convertisseur (100, 112), en particulier au moyen d'un système d'énergie éolienne (100, 112), comprenant les étapes :
- d'estimation d'une part de convertisseur d'un tronçon de réseau du réseau d'alimentation électrique (120), dans lequel la part de convertisseur désigne un rapport entre une puissance injectée au moyen de convertisseurs et une puissance injectée au total,
- d'injection d'une puissance électrique dans le réseau d'alimentation électrique (120) dans un mode normal,
- d'activation d'au moins une régulation de soutien pour soutenir le réseau d'alimentation électrique (120), dans lequel
- - l'activation est effectuée en fonction de la part de convertisseur, dans lequel
- - l'au moins une régulation de soutien peut être réglée respectivement par l'intermédiaire d'un degré d'activation et
- - le degré d'activation de l'au moins une régulation de soutien dépend respectivement de la part de convertisseur estimée,
**caractérisé en ce que**
- une plage de parts potentielle pour la part de convertisseur estimée peut être divisée en une plage de parts inférieure, moyenne et supérieure, dans lequel
- la plage de parts inférieure se situe sous une première valeur de référence,
- la plage de parts moyenne commence à la première valeur de référence et va jusqu'à une deuxième valeur de référence, qui est plus grande que la première valeur de référence, et
- la plage de parts supérieure se situe au-dessus de la deuxième valeur de référence, et
avec un degré d'activation maximal dans la plage de parts moyenne
- une fonction d'émulation (412) est activée, laquelle réagit à une modification de fréquence de la fréquence de réseau avec une modification de puissance de la puissance injectée, dans lequel la modification de puissance présente en réaction à la modification de fréquence le même comportement qu'une machine synchrone directement couplée au réseau d'alimentation électrique (120), dans lequel de préférence une masse d'inertie virtuelle est utilisée avec un couple d'inertie de masse réglable.

2. Procédé selon la revendication 1, **caractérisé en ce que**
- le degré d'activation présente une évolution de valeurs dépendant de la part de convertisseur,
- le degré d'activation peut adopter respectivement des valeurs dans une plage de valeurs de 0 à 100 % en continu ou dans plus de deux phases, en particulier dans plus de 5 phases, dans lequel
- la régulation de soutien respective est totalement activée lorsque son degré d'activation est de 100 %, et
- la régulation de soutien respective est désactivée lorsque son degré d'activation est de 0 %, et en particulier
- la régulation de soutien est **caractérisée par** une fonction de transfert, et le degré d'activation est appliqué en tant que facteur sur la fonction de transfert, ou en variante, si la régulation de soutien peut être mise en œuvre par plusieurs unités de régulation, un nombre des unités de régulation utilisées pour la régulation de soutien dépend du degré d'activation si bien que plus le nombre d'unités de régulation utilisées est important, plus le degré d'activation est élevé, et/ou
dans lequel en particulier
- la première valeur de référence se situe dans la plage de 50-60 %, et/ou la deuxième valeur de référence se situe dans la plage de 80-95 %.

3. Procédé selon la revendication 1 ou 2, **caractérisé en ce que**
- la première valeur de référence et/ou la deuxième valeur de référence sont choisies en fonction d'une autre caractéristique de réseau du réseau d'alimentation électrique (120), en particulier
- en fonction d'une mesure de flux de charge, qui caractérise un flux de puissance maximal entre le tronçon de réseau et la partie restante du réseau d'alimentation électrique (120).

4. Procédé selon l'une quelconque des revendications précédentes, **caractérisé en ce que**
- le degré d'activation destiné à régler la fonction d'émulation (412)
- - augmente dans la plage de parts inférieure d'une petite valeur de 10 % au maximum, en particulier de 0 % au fur et à mesure que la part de convertisseur augmente,
- - atteint dans la plage de parts moyenne une valeur maximale, en particulier de 100 %, et
- baisse à nouveau au fur et à mesure que la part de convertisseur continue à augmenter et atteint dans la plage de parts supérieure une petite valeur de 10 % au maximum, en particulier de 0 %, et/ou
- la fonction d'émulation est multipliée par le degré d'activation pour régler la fonction d'émulation, et/ou
- une modification de puissance d'une puissance injectée présente, en réaction à une modification de fréquence, une amplitude au moins deux fois plus élevée que lors d'une régulation de puissance dépendant de la fréquence fonctionnant en parallèle sans émulation d'une machine synchrone à une modification de fréquence identique, et/ou
- aucun écart de fréquence minimale de la fréquence de réseau n'est prédéfini par une fréquence de référence pour une modification de puissance d'une puissance injectée en réaction à une modification de fréquence, ou qu'un écart de fréquence minimal prédéterminé est au moins inférieur que lors d'une régulation de puissance dépendant de la fréquence fonctionnant en parallèle sans émulation d'une machine synchrone.

5. Procédé selon l'une quelconque des revendications précédentes, **caractérisé en ce que**
avec un degré d'activation maximal dans la plage de parts moyenne,
- une fonction de régulation de puissance (414) est implémentée pour la régulation de puissance en toute rapidité, dans lequel la fonction de régulation (414) réduit l'injection de puissance électrique à un signal de demande ou un critère de demande, et
- la réduction de la puissance est **caractérisée par** une constante de temps de réduction, dans lequel la constante de temps de réduction désigne un temps, dans lequel la puissance est réduite d'une valeur de puissance nominale, dans lequel la constante de temps de réduction est inférieure à 2, 1 ou 0,5 seconde (s), et qu'en particulier
- le degré d'activation pour régler la fonction de régulation de puissance (414)
- -augmente dans la plage de parts inférieure d'une petite valeur de 10 % au maximum, en particulier de 0 %, au fur et à mesure que la part de convertisseur augmente,
- - atteint dans la plage de parts moyenne une valeur maximale, en particulier de 100 %, et
- - baisse à nouveau au fur et à mesure que la part de convertisseur augmente et atteint dans la plage de parts supérieure une petite valeur de 10 % au maximum, en particulier de 0 %, et/ou
- la fonction de régulation de puissance (414) est multipliée par le degré d'activation pour régler la fonction de régulation de puissance, et/ou que
- lors de l'utilisation d'un système d'énergie éolienne (100, 112) en tant que générateur basé sur un convertisseur (100, 112), la réduction de la puissance injectée est plus rapide qu'une réduction d'une puissance générée à partir du vent au moyen du système d'énergie éolienne (110, 112), et/ou que
- de la puissance dans le système d'énergie éolienne (100, 112) est consommée en supplément pour réduire la puissance injectée, en particulier au moyen d'un circuit hacheur, et/ou que
- la puissance injectée est réduite à une valeur inférieure à zéro si bien que le système d'énergie éolienne (100, 112) prélève de la puissance du réseau d'alimentation électrique (120), en particulier, au moins en partie, au moyen d'un circuit hacheur.

6. Procédé selon l'une quelconque des revendications précédentes, **caractérisé en ce que**
avec un degré d'activation maximal dans la plage de parts moyenne,
- une régulation de gradient de fréquence (304) est activée, dans lequel la régulation de gradient de fréquence (304) modifie l'injection de puissance en fonction d'un gradient de fréquence, qui décrit de manière quantitative une modification de fréquence par temps, en particulier prédéfinit une partie de la puissance injectée de manière proportionnelle à la modification de fréquence, et qu'en particulier
- le degré d'activation pour régler la régulation de gradient de fréquence (304)
- - augmente dans la plage de parts inférieure d'une petite valeur de 10 % au maximum, en particulier de 0 %, au fur et à mesure que la part de convertisseur augmente,
- - atteint dans la plage de parts moyenne une valeur maximale, en particulier de 100 %, et
- - baisse à nouveau au fur et à mesure que la part de convertisseur continue à augmenter et atteint dans la plage de parts supérieure une petite valeur de 10 % au maximum, en particulier de 0 %, et/ou
- la régulation de gradient de fréquence (304) est multipliée par le degré d'activation pour régler la régulation de gradient de fréquence.

7. Procédé selon l'une quelconque des revendications précédentes, **caractérisé en ce que**
- est activée avec un degré d'activation maximal dans la plage de parts supérieure une régulation de puissance (416) dépendant de la fréquence, où la puissance injectée est modifiée en fonction de la fréquence de réseau selon une prescription de régulation prédéterminée, et la prescription de régulation présente une amplification de régulation et/ou est **caractérisée par** une vitesse de régulation, qui sont modifiées en fonction de la part de convertisseur et/ou en fonction d'une ou de la mesure de flux de charge, et/ou que
- est activée avec un degré d'activation maximal dans la plage de parts supérieure et lors de l'utilisation d'un système d'énergie éolienne (100, 112) une régulation de réserve instantanée (418), où de l'énergie cinétique provenant d'au moins un rotor (106) qui tourne est prélevée en fonction de la fréquence de réseau à des valeurs de la fréquence de réseau en dessous d'une valeur de référence de fréquence inférieure et est injectée dans le réseau d'alimentation électrique (120), et en particulier
- le degré d'activation pour régler la régulation de réserve instantanée (418) et/ou la régulation de puissance (416) dépendant de la fréquence,
- - présente dans la plage de parts inférieure une petite valeur de 10 % au maximum, en particulier de 0 %,
- - augmente dans la plage de parts moyenne d'une petite valeur de 10 % au maximum, en particulier de 0 %, au fur et à mesure que la part de convertisseur augmente, en particulier augmente seulement à partir d'une plage de parts, qui se situe de 10 % au maximum en dessous de la deuxième valeur de référence, et atteint une valeur maximale, en particulier de 100 %, dans la plage de parts supérieure, et
- - conserve sa valeur maximale au fur et à mesure que la part de convertisseur continue à augmenter jusqu'à 100 %, et/ou
- pour régler la régulation de réserve instantanée (418) ou la régulation de puissance dépendant de la fréquence (416), la régulation de réserve instantanée (418) ou la régulation de puissance (416) dépendant de la fréquence est multipliée par le degré d'activation.

8. Procédé selon l'une quelconque des revendications précédentes, **caractérisé en ce que**
avec un degré d'activation maximal dans la plage de parts supérieure une régulation d'angle d'inertie est activée, dans lequel
- la régulation d'angle d'inertie fait fonctionner un système de référence, où une masse d'inertie virtuelle tourne avec une vitesse de rotation correspondant à la fréquence de réseau et
- un signal de référence est déduit sur cette base avec une fréquence de référence et une position de phase par rapport à la tension de réseau, dans lequel
- la rotation de la masse d'inertie virtuelle suit une modification de la fréquence de réseau avec une fonction de temporisation si bien
- - que la position de phase du signal de référence se modifie lors d'une modification de la fréquence de réseau, et
- - la régulation d'angle d'inertie commande une injection de puissance en fonction de la position de phase du signal de référence, en particulier
- - commande une partie de la puissance injectée de manière proportionnelle à la position de phase, et/ou
- - la masse d'inertie virtuelle est **caractérisée par** un couple d'inertie qui est réglable, et
- - la fonction de temporisation présente une constante de temps d'accélération qui est proportionnelle au couple d'inertie, dans lequel de préférence
- le couple d'inertie est choisi en fonction d'un point de fonctionnement du générateur basé sur un convertisseur (100, 112), en particulier en fonction de la puissance injectée, et en particulier
- le degré d'activation pour régler la régulation d'angle d'inertie,
- - présente dans la plage de parts inférieure une petite valeur de 10 % au maximum, en particulier de 0 %,
- - augmente dans la plage de parts moyenne d'une petite valeur de 10 % au maximum, en particulier de 0 %, au fur et à mesure que la part de convertisseur augmente,
- - atteint dans la plage de parts supérieure une valeur maximale, en particulier de 100 %, et conserve sa valeur maximale au fur et à mesure que la part de convertisseur continue à augmenter jusqu'à 100 %, et/ou
- - la régulation d'angle d'inertie est multipliée par le degré d'activation pour régler la régulation d'angle d'inertie.

9. Procédé selon l'une quelconque des revendications précédentes, **caractérisé en ce qu'**avec un degré d'activation maximal dans la plage de parts supérieure
- une injection de puissance (308) dépendant de la tension de réseau est prévue, qui prédéfinit et injecte la puissance injectée ou une partie de celle-ci en fonction d'un écart de tension entre la tension de réseau et une tension de référence, en particulier en fonction d'une tension nominale de réseau, dans lequel en particulier
- - une partie de puissance de la puissance injectée est prédéfinie et est injectée de manière proportionnelle à l'écart de tension, et en particulier
- en supplément une autre partie de la puissance injectée est prédéfinie et est injectée en fonction d'une partie intégrale de l'écart de tension, en particulier de manière proportionnelle par rapport à celui-ci, et en particulier
- le degré d'activation pour régler l'injection de puissance en fonction de la tension de réseau
- - présente dans la plage de parts inférieure une petite valeur de 10 % au maximum, en particulier de 0 %,
- - augmente dans la plage de parts moyenne d'une petite valeur de 10 % au maximum, en particulier de 0 %, au fur et à mesure que la part de convertisseur augmente, en particulier augmente seulement à partir d'une plage de parts, qui se situe de 10 % - 20 % au maximum sous la deuxième valeur de référence,
- - atteint dans la plage de parts supérieure une valeur maximale, en particulier de 100 %, l'atteint en particulier seulement à partir d'une plage de parts de 90 %, et/ou
- - l'injection de puissance dépendant de la tension de réseau est multipliée par le degré d'activation pour régler l'injection de puissance dépendant de la tension de réseau.

10. Procédé selon l'une quelconque des revendications précédentes, **caractérisé en ce qu'**avec un degré d'activation maximal dans la plage de parts supérieure
- une injection de puissance réactive (308) dépendant de la tension de réseau est prévue, qui prédéfinit et injecte la puissance réactive injectée ou une partie de celle-ci en fonction d'un écart de tension entre la tension de réseau et une tension de référence, en particulier en fonction d'une tension nominale de réseau, dans lequel
- au moins une partie de la puissance réactive injectée est prédéfinie et injectée en fonction d'une partie intégrale de l'écart de tension, en particulier de manière proportionnelle à celui-ci, et en particulier
- - le degré d'activation pour régler l'injection de puissance réactive dépendant de la tension de réseau
- - - présente dans la plage de parts inférieure une petite valeur de 10 % au maximum, en particulier de 0 %,
- - - augmente dans la plage de parts moyenne d'une petite valeur de 10 % au maximum, en particulier de 0 %, au fur et à mesure que la part de convertisseur augmente, en particulier augmente seulement à partir d'une plage de parts, qui se situe au maximum de 10 %-20 % sous la deuxième valeur de référence,
- - - atteint dans la plage de parts supérieure une valeur de maximale, en particulier de 100 %, en particulier l'atteint seulement à partir d'une plage de parts de 90 %, et/ou
- - - l'injection de puissance dépendant de la tension de réseau est multipliée au degré d'activation pour régler l'injection de puissance réactive dépendant de la tension de réseau.

11. Procédé selon l'une quelconque des revendications précédentes, **caractérisé en ce que**
avec un degré d'activation maximale dans la plage de parts supérieure,
- une commande de maintien (306) est activée, où une puissance de maintien est fournie en tant que réserve de puissance, **en ce que** le générateur basé sur un convertisseur (100, 112) fonctionne de manière étranglée d'une puissance étranglée, en particulier le système d'énergie éolienne (100, 112) génère, à hauteur de la puissance étranglée, moins de puissance à partir du vent qu'il ne serait possible en raison d'un vent prédominant pour quitter au besoin le fonctionnement étranglé et augmenter la puissance injectée de la puissance étranglée, ou d'une partie de celle-ci, et en particulier
- le degré d'activation pour régler la commande de maintien (306)
- - augmente dans la plage de parts inférieure d'une petite valeur de 10 % au maximum, en particulier de 0 %, au fur et à mesure que la part de convertisseur augmente,
- - la valeur continue à augmenter au fur et à mesure que la part de convertisseur augmente dans la plage de parts moyenne,
- - atteint dans la plage de parts supérieure une valeur maximale, en particulier de 100 % et conserve sa valeur maximale au fur et à mesure que la part de convertisseur continue à augmenter jusqu'à 100 %, et/ou
- pour régler la commande de dérivation, la commande de dérivation (306) est multipliée au degré d'activation.

12. Procédé selon l'une quelconque des revendications précédentes, **caractérisé en ce que**
avec un degré d'activation maximal dans la plage de parts supérieure
- un mode de tension marquée (310) est activé, dans lequel en particulier le générateur basé sur un convertisseur (100, 112) présente plusieurs onduleurs pour générer respectivement une partie de la puissance injectée et au moins un des onduleurs passe du fonctionnement à courant marqué dans un fonctionnement à tension marquée lors de l'activation du mode de tension marquée (310), et en particulier
- le degré d'activation pour régler le mode de tension marquée (310)
- - présente dans la plage de parts inférieure une petite valeur de 10 % au maximum, en particulier de 0 % ;
- - présente dans la plage de parts moyenne une petite valeur de 10 % au maximum, en particulier de 0 %,
- - augmente dans la plage de parts supérieure d'une petite valeur de 10 % au maximum, en particulier de 0 %, au fur et à mesure que la part de convertisseur augmente jusqu'à une valeur maximale, en particulier de 100 %, et/ou
- pour régler le mode de tension marquée (310), un nombre d'onduleurs ou de générateurs basés sur un convertisseur (100, 112) est utilisé en fonction du degré d'activation.

13. Procédé selon l'une quelconque des revendications précédentes, **caractérisé en ce que**
- une régulation d'atténuation (302) est activée avec un degré d'activation maximal dans la plage de parts inférieure, dans lequel
- une oscillation à basse fréquence est détectée dans le réseau d'alimentation électrique (120), laquelle désigne en particulier une oscillation d'une amplitude de la tension de réseau, qui présente une fréquence inférieure à une fréquence nominale de réseau, et
- une atténuation de l'oscillation à basse fréquence détectée est mise en oeuvre, en particulier
- le degré d'activation pour régler la régulation d'atténuation (302)
- - baisse dans la plage de parts inférieure, en particulier à une part de convertisseur de 0-10 %, d'une valeur importante d'au moins 90 %, en particulier de 100 %, au fur et à mesure que la part de convertisseur augmente, en particulier baisse encore dans la plage de parts inférieure à 0-10 %,
- - présente dans la plage de parts moyenne une petite valeur de 10 % au maximum, en particulier de 0 %,
- - présente dans la plage de parts supérieure une petite valeur de 10 % au maximum, en particulier de 0 %, et/ou
- la régulation d'atténuation est multipliée par le degré d'activation pour régler la régulation d'atténuation (302).

14. Procédé selon l'une quelconque des revendications précédentes, **caractérisé en ce que**
- un type de centrale dominant du tronçon de réseau est détecté parmi les générateurs ne réalisant pas l'injection au moyen de convertisseurs, dans lequel
- - des générateurs d'injection au moyen de convertisseurs ne permettent pas, en tant que type de centrale, de distinguer au moins entre une centrale à charge de base et une centrale de régulation, en particulier au moins entre une centrale nucléaire, une centrale au charbon, une centrale au gaz et une centrale hydraulique, et
- - le type de centrale précisément forme le type de centrale dominant, qui précisément peut injecter la majeure partie de la puissance dans le tronçon de réseau parmi les générateurs ne réalisant aucune injection au moyen de convertisseurs, et
- en fonction du type de centrale dominant,
la première et la deuxième valeur de référence sont choisies, et/ou
au moins une régulation complémentaire est choisie et employée.

15. Système d'énergie éolienne (100, 112) pour injecter une puissance électrique dans un réseau d'alimentation électrique (120) présentant une tension de réseau avec une fréquence de réseau, dans lequel le système d'énergie éolienne (100, 112) est réalisé en tant que générateur basé sur un convertisseur (100, 112), comprenant :
- un dispositif d'estimation pour estimer une part de convertisseur d'un tronçon de réseau du réseau d'alimentation électrique (120), dans lequel la part de convertisseur désigne un rapport entre la puissance injectée au moyen de convertisseurs et la puissance injectée au total,
- un dispositif d'injection (105) pour injecter une puissance électrique dans le réseau d'alimentation électrique (120) dans un mode normal,
- un dispositif de commande (103, 122) présentant des commandes ou des régulations pour appliquer au moins une régulation de soutien et préparé pour activer l'au moins un mode de soutien pour soutenir le réseau d'alimentation électrique (120),
dans lequel
- - l'activation est effectuée en fonction de la part de convertisseur, dans lequel
- - l'au moins une régulation de soutien peut être réglée par l'intermédiaire d'un degré d'activation et
- - le degré d'activation de l'au moins une régulation de soutien dépend respectivement en fonction de la part de convertisseur estimée,
**caractérisé en ce que**
- une plage de parts potentielle pour la part de convertisseur estimée est divisée en une plage de parts inférieure, moyenne et supérieure,
dans lequel
- la plage de parts inférieure se situe sous une première valeur de référence,
- la plage de parts moyenne commence à la première valeur de référence et va jusqu'à une deuxième valeur de référence qui est supérieure à la première valeur de référence, et
- la plage de parts supérieure se situe au-dessus de la deuxième valeur de référence, et
avec un degré d'activation dans la plage de parts moyenne,
- une fonction d'émulation (412) est activée, qui réagit à une modification de fréquence de la fréquence de réseau avec une modification de puissance d'une puissance injectée, dans lequel la modification de puissance présente, en tant que réaction à la modification de fréquence, le même comportement qu'une machine synchrone directement couplée au réseau d'alimentation électrique (120), dans lequel de préférence une masse d'inertie virtuelle est utilisée avec un couple d'inertie de masse réglable.

16. Système d'énergie éolienne (100, 112) selon la revendication 15, **caractérisé en ce que** le système d'énergie éolienne (100, 112) est mis au point pour exécuter un procédé selon l'une quelconque des revendications 1 à 14.
